# EUROPEAN PATENT APPLICATION

(11) **EP 4 748 504 A2**
(43) Date of publication of application: **27.05.2026**
(21) Application number: 26171351.5
(22) Date of filing: 05.11.2019
(51) Int. Cl.: B05D 3/06

(54) **METHOD FOR MANUFACTURING COATED PANELS**

(30) Priority: 09.11.2018 BE 201805787; 19.04.2019 US 201962836268 P; 16.07.2019 BE 201905461; 18.07.2019 BE 201905469
(62) Divisional of application: 19813649.1
(71) Applicant: Unilin, BV, 8710 Wielsbeke (BE)
(72) Inventor: Clement, Benjamin, 8790 Waregem (BE); Ledegen, Sam, 9000 Gent (BE)
(74) Representative: Unilin Technologies

(57) **Abstract**

A method for making a coated paper sheet, wherein the coated paper sheet comprises a paper sheet and a partially cured acrylate coating layer. The partially cured acrylate coating layer is provided for being at least partially cured in a thermal pressing operation. The method comprises the steps of providing a paper sheet; and applying a coating composition onto the paper sheet thereby obtaining a coating layer on the paper sheet. The coating composition comprises at least an acrylate resin, one or more components that comprise free hydroxyl groups, one or more components that comprise free isocyanate groups, and optionally one or more thermoinitiators. The method comprises the step of gelling the coating composition on the paper sheet to a non-viscous state; and such that the acrylate coating layer is a partially cured coating layer.

## Description

This invention relates to coated panels, in particular floor panels, and also to a method for the production of floor panels.

More specifically, the invention relates to panels with a substrate and a top layer applied thereto having a decor layer, for example a decor layer that comprises printing. Such floor panels are widely known per se, for example from WO 97/47834. The floor panels disclosed in said document relate among others to floor panels with a substrate that is chiefly composed of an HDF sheet with a laminate layer pressed directly onto it that comprises one or more paper sheets impregnated with melamine resin, preferably also including a paper sheet with printing in for example a wood or stone motif, specifically a so-called decorative paper. The above-mentioned melamine resin forms among others a translucent wear layer above the decorative paper, but the transparency or translucency leaves much to be desired. On the underside of the substrate is a backing layer or balancing layer, also based on a paper sheet impregnated with melamine resin. This backing layer provides a compensating effect for residual tensile stresses present in the cured melamine resin of the top layer. It remains possible to form extremely deep structures in the curing melamine surface. So-called white mountains frequently occur. These are zones in which inclusions are concentrated in the melamine surface. These primarily occur at sites in which deep indentations or structures are implemented.

It is known that the melamine surface of such a laminate panel gives rise to clicking sounds in the use thereof. Multiple solutions to this problem are known from the prior art. WO 03/016655 discloses the application of a sound-damping layer such as a cork layer under the melamine layer. It is known from WO 2010/088769, among other documents, to provide the melamine layers with a coating of a flexible monomer. WO 2009/101217 and WO 2010/070474 give examples of laminate panels wherein the top layer is composed, instead of melamine resin, mainly of polyvinyl chloride (PVC). WO 2010/070474 discloses panels with a printed decor layer that can be formed on the substrate and is finished with a transparent PVC layer.

Furthermore, a method is known from WO 01/47726 of finishing panels with a printed decor layer with a UV (ultraviolet) curing or electron beam curing acrylate resin. This process is difficult to integrate into existing methods for the production of laminate panels and requires complex material logistics, complex machines, and leads to a high cost. For example, electron beam curing requires an inert atmosphere, which makes it possible to carry out treatment at the plate level, and this technique is primarily applied to smaller panels or sheets in a physically closed lead space, with the purpose of neutralizing the occurrence of unhealthy gamma radiation. These lead encapsulation components are thicker than 2.5 mm and are extremely heavy. The photoinitiators that are required in curing by UV radiation have a detrimental influence on the quality of the surface obtained. The molecules that are used as photoinitiators are coming under increasing pressure because of the health risks they entail to humans.

In panels in which the top layer is composed entirely of polyvinyl chloride (PVC), a loss of scratch resistance is observed in comparison to the conventional melamine surface. In addition, the PVC layer must be configured to be considerably thicker than a melamine layer in order to obtain comparable wear resistance. The nature and thickness of the PVC layer give rise to a plastic-like appearance of the floor panel, especially in cases where imitation of a product such as wood, stone or ceramic is intended. The relief that can be obtained in a PVC layer is unsharp, which detracts from the realistic appearance of the imitation obtained.

In panels in which the top layer is obtained from UV cured or electron beam cured acrylate, such as in WO 01/47726, favorable surface properties are achieved. The relief that can be obtained in such a top layer is limited in that structural films must be applied, for example such as in EP2019735.

The present invention is first intended to provide an alternative coated panel wherein a solution is provided to one or more of the problems with the panels of the prior art.

For this purpose, the invention relates in the first independent aspect to a coated panel, preferably a floor panel, a wall panel or a furniture panel, with at least a substrate and a top layer applied thereto, wherein the above-mentioned top layer comprises at least a decor layer and a translucent or transparent wear layer, characterized in that the above-mentioned wear layer comprises a thermally cured acrylate resin and/or a thermally cured unsaturated polyester resin. Preferably, the resin is partially or completely cured in the thermal curing.

In this document, a cured unsaturated polyester resin refers to a polyester resin that was unsaturated before the curing and can be cured by crosslinking of the double bonds in the unsaturated polyester resin.

The use of a thermally cured acrylate resin and/or a thermally cured unsaturated polyester resin gives rise to new possibilities for designing the wear layer, while the excellent qualities of a wear layer of acrylate resin or unsaturated polyester resin are retained. For example, the wear layer can thus be cured by means of hot pressing with a structured pressing element. Surprisingly, the inventors have found that the structure of the pressing element is quite favorably copied in the curing acrylate resin and/or the curing unsaturated polyester resin. In the curing reaction of the acrylate resin and/or the curing unsaturated polyester resin, in contrast to a curing melamine resin, the so-called chemical moisture or moisture that occurs as a byproduct of the reaction is not present, such that the risk that of formation of inclusions in the translucent layer is limited, even when one is working with deep structures, for example with a local depth of more than 400 µm, or even 1 mm or more with respect to the overall surface.

In addition, the inventors found that a thermally cured acrylate resin and/or thermally cured unsaturated polyester resin can have better transparency than a thermally cured melamine resin such as that available in the laminate panels of the prior art. The inventors attribute this to the strong crimp of a polycondensing melamine resin. For this reason, and due to the brittleness of the melamine resin, the melamine resin in the cured state shows a significant number of microcracks, which is not the case in the wear layer based on thermally cured acrylate resin of the invention.

Furthermore, the inventors were able to determine that residual tensile stresses that can be present after curing in the wear layer are much lower in the case of the invention than in laminate panels of the prior art, such that the risk that the obtained panels or parts thereof will show bending is substantially reduced, even if one is to work without a backing layer.

The formed wear layer is further softer than a melamine surface, and together with the lower residual tensile stresses in the surface, this property allows for more acceptable scratching noises, specifically for a noise comparable to that of actual wood.

Moreover, the thermal curing also allows more uniform curing to be obtained than is the case in UV cured acrylate resins. In the use of UV radiation for curing, the penetration of the light is limited in depth. However, the thermal curing of the invention can be initiated by means of one or more thermoinitiators that are mixed homogeneously, or essentially homogeneously, with the acrylate resin or with the unsaturated polyester resin. In this manner, the curing reaction can take place throughout the thickness of a layer formed by acrylate resin or unsaturated polyester resin almost simultaneously and/or to the same degree. In addition, thicker cured layers can be formed, for example layers with a thickness of between 50 and 1000 µm, more specifically between 60 and 300 µm, and even more specifically between 100 and 300 µm.

The qualities of the acrylate resin or the unsaturated polyester resin are expressed mainly if the above-mentioned acrylate resin or the above-mentioned unsaturated polyester resin is cured at least by means of a thermally initiated radical crosslinking reaction. The above-mentioned curing preferably comprises at least a crosslinking of double carbon bonds present in the acrylate resin or in the unsaturated polyester, such as can be the case in UV or electron beam cured acrylate resins or unsaturated polyester resins.

In accordance with a particular possibility, the above-mentioned acrylate resin is cured, both by means of a thermally initiated radical crosslinking reaction wherein the double carbon bonds present in the acrylate resin undergo crosslinking, and by means of a crosslinking reaction wherein an oligomer or monomer with a hydroxyl (-OH) and/or an amine (-NH₂) and/or a carboxyl (-COOH) functionality is crosslinked with an isocyanate, aziridine carbodiimide, or the like. This crosslinking reaction is promoted by means of the temperature used during the first crosslinking reaction. In accordance with a particular example, the acrylate resin comprises or consists of a polyurethane acrylate resin.

It is to be noted that the use of curing agents such as isocyanate or aziridine in a UV curable coating is known to the inventors per se as a dual cure. Such curing agents cause a second internal crosslinking, specifically of the hydroxyl (-OH) and/or carboxyl (-COOH) and/or amine (-NH₂) functional acrylate resins, to take place only in an uncontrolled manner and possibly with a long delay after the previous UV curing. The above-mentioned particular possibility offers the possibility of providing coated panels with a wear layer obtained by applying a dual cure system, wherein the first crosslinking relates to a thermal curing. By means of the thermal energy of the first crosslinking, the second crosslinking is initiated in a controlled manner, and it can be completed in a short period of time. In other words, this is an "instant dual cure system".

In accordance with a particular possibility, the curing of the acrylate resin or the unsaturated polyester resin is further promoted by a thermoset promotor, such as for example by 2,4 pentanedione or N,N-diethylacetoacetamide, and/or by a thermoset accelerator, such as for example by a cobalt-free accelerator, such as by copper or iron complex, or by cobalt octoate, amine diethyl aniline, dimethyl-p-toluidine, or ethoxylated p-toluidine.

It is clear that the presence of a thermoinitiator in the acrylate resin used or the unsaturated polyester resin used can play an important role in the quality and relief aspects of the obtained wear layer.

A thermoinitiator can more generally be defined as a thermally unstable molecule that breaks down or disintegrates on exposure to heat, at least in one or more radicals. The radicals produced then play the same role as the radicals that are produced in known photoinitiators in the UV curing of acrylate resins. The thermally obtained radicals initiate the polymerization reaction of the double carbon bonds of the acrylate functionalities present in the acrylate resin.

With the same purpose as in the first aspect, the present invention relates in accordance with an independent second aspect to a coated panel, with at least a substrate and a top layer applied thereto, wherein the above-mentioned top layer comprises at least a decor layer and a translucent or transparent wear layer, characterized in that the above-mentioned wear layer is obtained based on a mixture of at least on the one hand acrylate resin and/or an unsaturated polyester resin and on the other hand a thermoinitiator. It is clear that the coated panels of the second aspect can show the features of the first aspect or the preferred embodiments thereof. In particular, the mixture can further comprise crosslinking agents such as isocyanate, aziridine, carbodiimide or the like, such that the above-mentioned wear layer is obtained by means of the instant dual cure system mentioned in the context of the first aspect. Furthermore, the mixture can also comprise thermoset promoters and/or accelerators such as those mentioned in the context of the first aspect of the invention.

Preferably, the above-mentioned thermoinitiator is an organic peroxide, preferably benzoyl peroxide, a methylbenzoyl peroxide, TPBIN (tertiary butylperoxy-3,5,5 trimethyl hexanoate) or lauryl peroxide. The inventors have found that these thermoinitiators have a suitable minimal activation temperature that is necessary in order to achieve decomposition into at least one or more radicals, such that a sufficiently cured wear layer can be obtained with an acceptable energy consumption, specifically at a moderate curing temperature. Of the above-mentioned peroxides, lauryl peroxide has the lowest activation temperature, and the curing of this resin can thus be completed quickly. In some cases, however, for example in the case in which during curing, indentations of considerable depth are to be formed in the wear layer, for example with a depth of 0.1 mm or more, or in the case where adhesion is to be obtained with an underlying polyurethane-comprising layer, it is desirable for the resin to remain flowable for a longer time. In such a case, it is preferable to use as a thermoinitiator at least benzoyl peroxide or methylbenzoyl peroxide. Of the latter initiators, methyl benzoyl peroxide is the most interesting, since it yields as a reaction product the less toxic toluene, instead of benzene in the case of benzoyl peroxide. In this connection, it is also to be noted that the reaction with lauryl peroxide gives rise to the formation of non-toxic aliphatics.

Other examples of organic and inorganic peroxides that are suitable as thermoinitiators are 2-butanone peroxide, persulfate, peroxydiphosphate and persulfate.

Still other examples of peroxides that are suitable as thermoinitiators are ketone peroxide, diacyl peroxide, peroxyketal, hydroperoxide, peroxydicarbonate, peroxymonocarbonate, preferably tert-butyl peroxy 3,5,5 trimethyl hexanoate (TPBIN).

In addition to peroxides, as an alternative, one can also use azo-polymerization initiators, such as azonitrile, azoester, hyponitrites and/or azoamide. As a specific example, one can use azobisisobutyronitrile (AIBN), 2-methylbutyronitrile (AMBN), azovaleronitrile (AVN). Another alternative is the use of cesium ions.

Of course, two or more of the above-mentioned thermoinitiators can be combined.

Preferably, the above-mentioned mixture comprises 0.1-5 parts of thermoinitiator per 100 parts of acrylate resin or per 100 parts of unsaturated polyester resin, and more preferably 0.5-2 parts of thermoinitiator per 100 parts of acrylate resin or per 100 parts of unsaturated polyester resin, and more preferably 0.1-2 parts of thermoinitiator per 100 parts of acrylate resin or per 100 parts of unsaturated polyester resin (if extra crosslinking is carried out with UV light, one can work with such a lower amount of thermoinitiator in order to obtain a similar final curing). By changing the concentration of the thermoinitiator, the obtained chain length of the polymerized acrylate resin or the polymerized unsaturated polyester resin can be adjusted. With larger amounts of the thermoinitiator, the reaction comes to an end sooner, and shorter chain lengths are obtained, and with smaller amounts, longer chain lengths are obtained. With 0.5-2 parts of thermoinitiator per 100 parts of acrylate resin or per 100 parts of unsaturated polyester resin, a balance is reached between the rate of the reaction and the degree of crosslinking or the chain length. The time frame to half or complete curing is preferably such that a sufficient flow of the resin can be achieved. Flow of the resin is important, for example in a case where the structure of a pressing element is to be copied onto the surface of the wear layer. This specifically requires displacement of the acrylate resin or the unsaturated polyester resin into all relief parts of the pressing element.

In the case of the above-mentioned benzoyl peroxide, methylbenzoyl peroxide and/or lauryl peroxide, with 0.5 to 2 parts per hundred parts of acrylate resin, sufficient curing is obtained within an economically acceptable time frame and with an acceptable energy consumption while retaining sufficient flow.

It is already clear from the above that by means of the choice and the concentration of thermoinitiator, the flow of the acrylate resin or of the unsaturated polyester can be adjusted. The flow can also be extended, optionally to an even further degree, in the case of acrylate resin by increasing the content of reactive diluting monomers or difunctional monomers, such as for example dipropylene glycol diacrylate (DPGDA), in the acrylate resin. Preferably, the acrylate resin comprises between 20 and 60 percent by weight of monomers, preferably monofunctional and/or difunctional and/or trifunctional and/or tetrafunctional monomers.

In the following, preferred embodiments are discussed that can be applied in combination with the first, second, third and/or the fourth aspect of the invention.

Preferably, the wear layer of the coated panel of the first and/or the second aspect comprises traces of a peroxide, such as benzoyl peroxide, methylbenzoyl peroxide and/or lauryl peroxide.

Preferably, the wear layer comprises at least traces of a reaction product resulting from the reaction of the thermoinitiator and the acrylate resin. For example, the wear layer can comprise traces of benzene, toluene or aliphatics.

Preferably, the above-mentioned wear layer is uniformly or essentially uniformly cured over its entire thickness.

Preferably, thermal curing comprises chemical crosslinking-preferably of the double carbon bonds present in the acrylate resin-and/or of the double carbon bonds present in the unsaturated polyester resin. Such a crosslinking reaction gives rise to extremely favorable wear characteristics. By varying the concentration initiators (thermal initiators and/or photoinitiators), and with the amount of UV light in use of additional UV curing that is added to the lacquer matrix before the pressing process, the degree of polymerization and the type of polymerization can be controlled. While it is known that EB curing takes place more homogeneously via the matrix, it can be stated that in working with thermal curing, in the case of specified texture depths and relief structures, there is a warm front that provides less homogeneous curing as a function of time. This can influence the adhesion characteristics or the chain length of the matrix.

Preferably, the above-mentioned wear layer is obtained based on a mixture containing at least on the one hand acrylate resin and/or unsaturated polyester resin and on the other hand a photoinitiator. More preferably, the mixture comprises 0.1-5 parts of a photoinitiator per 100 parts of acrylate resin or per 100 parts of unsaturated polyester resin.

More preferably, this mixture comprises 0.1-5 parts of two different photoinitiators per 100 parts of acrylate resin or per 100 parts of unsaturated polyester resin. Preferably, the photoinitiators are selected such that one photoinitiator cures the uppermost 20 µm of the wear layer (curing at the surface) and the other photoinitiator cures the wear layer more in depth (curing in depth). This allows more favorable curing of the wear layer to be obtained.

Preferably, the above-mentioned decor layer comprises a carrier sheet provided with synthetic material, such as a paper sheet. It can for example be a printed paper of the type that is applied for the production of laminate panels of the DPL type and/or a paper with a Gurley value of less than 30 seconds, or even less than 25 or 20 seconds. The low Gurley value is advantageous for the provision of the above-mentioned synthetic material into the core of the paper. Preferably, the paper has a surface weight of 40 to 250 grams per square meter, and more preferably between 55 and 150, or between 65 and 90 grams per square meter. The higher surface weights, specifically of between 90 and 150, are preferably applied in furniture panels, while the lower surface weights, specifically of between 65 and 90 grams per square meter, are preferably applied in floor panels. The printing can be obtained in an analogous manner, for example by means of an offset printing process with printing cylinders, and/or in a digital manner, for example by means of an inkjet printing process, preferably in a so-called single-pass printer.

Instead of paper provided with synthetic material, it is also possible to use as a decor layer for example a film out of synthetic material, such as a film of PVC (polyvinyl chloride) or PET (polyethylene terephthalate), whether printed or not, or a veneer. It is to be noted that films out of synthetic material are an example of wet impermeable layers and that the present inventors have found that because no chemical moisture is produced in the curing of the acrylate resin, a thermally cured wear layer, more specifically based on acrylate resin, can be formed on a film out of synthetic material or other impenetrable layer. In the laminate layers of the panels of the prior art, it is assumed by the inventors that the chemical moisture migrates in the direction of the substrate, and in the prior art, an impermeable layer above this substrate is undesirable.

Preferably, the synthetic material that is provided on the carrier sheet is a synthetic material that comprises double carbon bonds.

In accordance with a particular embodiment, the synthetic material that is provided on the carrier sheet forms a part of the above-mentioned wear layer, wherein this part is located between the decor layer itself, for example a printed pattern or a veneer, and the part of the wear layer formed by thermally cured acrylate. The part of the wear layer formed by the synthetic material of the decor layer can comprise hard particles such as particles of aluminum oxide, silicon oxide or silicon carbide.

Preferably, the synthetic material that is provided on the carrier sheet is selected from the list of amino resins, urea formaldehyde, melamine urea formaldehyde, melamine formaldehyde, a polyurethane dispersion, an urethane-acryl copolymer dispersion, acrylate, latex, melamine acrylate, reactive acrylate monomers, optionally in combination with a cross linking agent such as carbodiimide, polyisocyanate or aziridine. The synthetic material is preferably applied to the carrier sheet in a water-based mixture or dispersion, for example via immersion, one or more roll applications, and/or one or more spray or pouring applications. This dispersion can be anionically, cationically, or non-ionogenically stabilized. In cases where this carrier sheet comprises a digitally printed decor layer, the dispersion is preferably cationically stabilized in order to prevent possible salts or acids in an optional inkjet receiver coating from destabilizing the polyurethane dispersion. It is of course not excluded for the above-mentioned synthetic material to be melamine formaldehyde. In such a case, on the surface of the carrier sheet provided with a synthetic material oriented toward the wear layer, for example, a coating is applied that promotes bonding with thermally curing acrylate resin or thermally curing polyester resin. Such a coating can comprise an aliphatic polyurethane dispersion, latex dispersion, a water-based UV curable substance such as water-based UV curable acrylate resin, melamine acrylate, a chemically modified melamine resin or an etherified melamine resin. It is of course not excluded for the above-mentioned synthetic material to be thermally curable acrylate resin or unsaturated polyester resin. The use of a cationically stabilized polyurethane dispersion, such as in this case, to form a coating on and/or to impregnate a printed paper sheet constitutes an important finding per se. The invention then also relates in accordance with a particular independent aspect to a method for the production of coated panels with a substrate and a decorative top layer with a printed paper sheet, characterized in that the method comprises at least the step of the provision of a cationically stabilized polyurethane dispersion on the paper sheet that is printed or is to be printed. It is clear that the printing of this paper sheet is preferably carried out in a digital manner and/or that this paper sheet comprises a previously applied coating with a pH of less than 7, preferably 5 or lower, for example an inkjet receiver coating. The present particular aspect can of course show other preferred features such as those described earlier in this paragraph or described in the context of the other aspects of the present invention. The polyurethane dispersion used can further also show the following characteristics.

In accordance with an important example, a polyurethane dispersion is applied to the carrier sheet. Preferably, a polyurethane coating is obtained on the carrier sheet with a König hardness of 20 to 160 seconds, 40 to 120 seconds, and preferably 40 to 100 seconds, more preferably 40 to 80 seconds. The inventor has found that this hardness gives rise to better adhesion to the thermally curing acrylate resin or thermally curing unsaturated polyester resin of the wear layer. Polyurethane coatings with a higher König hardness can more easily lead to adhesion problems. In addition, the inventors have found that the softer polyurethane, specifically with a König hardness of 20 to 160 seconds, 40 to 120 seconds, and preferably 40 to 80 seconds, shows better scratch resistance. The polyurethane of the present example can also be located in the core of the carrier sheet. In accordance with another important possibility, the core of the carrier sheet impregnated with a polycondensing resin such as a melamine-based resin, while the polyurethane coating is mainly present at the surface of the carrier sheet. Such a possibility provides, in an economical manner, good splitting resistance on the carrier sheet, while the advantages of the polyurethane coating, for example the reduced clicking sounds or other sounds, are retained. Preferably, the polyurethane coating shows an elongation of between 40 and 400%, 100 and 300%, and preferably 120 and 250%. The high elongation provides a bridge between the decorative paper, which as mentioned above can optionally be provided in the core with a polycondensing, for example a melamine-based, resin, and the thermally curing acrylate resin. Preferably, the above-mentioned acrylate resin is at least obtained based on a multifunctional acrylate or methacrylate monomer and/or oligomer, such as a hexafunctional acrylate or methacrylate oligomer. A multifunctional acrylate or methacrylate oligomer provides a hard layer, but one that is as brittle and wear-resistant as possible.

In accordance with the above-mentioned important example, a polyurethane dispersion with a weight of between 5 and 60 grams of dry matter per square meter, and preferably between 10 and 20 grams of dry matter per square meter, is preferably applied to the carrier sheet.

Preferably, the polyurethane dispersion applied in accordance with the above-mentioned important example is water-based and comprises an acrylate functionality, and/or the dispersion comprises a UV acrylate, for example an epoxy modified polyurethane acrylate, such as for example the commercially available NeoRad UV20 40W. By means of the present preferred embodiment, improved adhesion can be obtained with thermally curing acrylate resin.

In order to promote film formation of the PU dispersion, one preferably uses 1 to 10 percent by weight, preferably 2 to 6%, of solvent in the dispersion. For example, one can use DPnB (dipropylene glycol n-butyl ether), DPM (dipropylene glycol methyl ether); PM (propylene glycol methyl ether), 2-butoxyethanol or diethylene glycol.

Preferably, the PU dispersion shows an MFFT (minimum film forming temperature, ISO 2115) of between 0 and 40°C, between 6 and 20°C, and preferably between 5 and 15°C.

Reactive 100% acrylate primer can also be used. This primer penetrates the melamine layer and can be covalently bonded to the transparent top layer that is later applied. This acrylate primer can for example be composed of HDDA (1,6-hexane diol diacrylate), ACMO (acryloyl morpholine), melamine acrylate or acidic adhesion acrylate.

Preferably, the above-mentioned acrylate resin is at least obtained based on a monofunctional or difunctional acrylate or methacrylate monomer and/or oligomer. A difunctional acrylate or methacrylate oligomer yields a tough or less brittle wear-resistant layer. Trifunctional and/or tetrafunctional acrylates can also be used.

Preferably, one works with acrylate monomers or oligomers, since these are more reactive than methacrylate monomers and oligomers.

Preferably, the above-mentioned acrylate resin is of the aliphatic type. By means of such an acrylate resin, aging and/or discoloration are limited to the maximum degree.

Preferably, the acrylate resin comprises 5 to 80 percent by weight of monomers, or more preferably 5 to 60 percent by weight, which can be monofunctional, difunctional or multifunctional. Monomers in the acrylate resin can have one or more of the following effects: increasing the viscosity to the desired value, increasing the adhesion through better absorption in adjacent layers, such as in the substrate, or positively or negatively influencing the reactivity in the decor layer, significantly influencing the flexibility and/or brittleness of the obtained wear layer, setting the operational range for example in terms of the temperature to be used, and positively influencing the chemical resistance. For example, with a multifunctional monomer, better crosslinking, curing and chemical resistance can be achieved. For this purpose, for example, a trifunctional monomer such as TMPTA can be used. With difunctional monomers, in view of the short chain length, promotion of the crosslinking and curing can also be achieved. For example, DPGDA (dipropylene glycol diacrylate) monomer can be used, with a sufficient flow being obtained during curing.

In accordance with the most preferred embodiment, the above-mentioned acrylate resin is at least obtained based on a mixture of two or more acrylate oligomers of different functionality, preferably based on a mixture of a multifunctional acrylate oligomer, wherein "multi" is considered to mean more than two, and a difunctional acrylate oligomer. With such a mixture, the desired hardness and toughness of the final wear layer can be set.

The use of acrylate resin as a wear layer also makes it possible to mix in acrylates with particular characteristics. For example, the above-mentioned acrylate resin can at least be obtained with a chemically modified acrylate such as a fluoroacrylate. By adding chemically modified acrylates to the acrylate resin, characteristics can be achieved such as water repellency, ease of maintenance, anti-fingerprint properties, and antimicrobial characteristics. Other possible additives to the acrylate resin are metallic pigments and materials that improve the haptic interaction. The additives mentioned here have no or essentially no influence on thermal curing of the acrylate resin.

Preferably, at least hard particles such as aluminum oxide particles, silicon oxide or silicon carbide particles are added to the acrylate resin or to the unsaturated polyester resin. In accordance with an alternative, the above-mentioned hard particles are located between the above-mentioned decor layer and the part of the wear layer formed by means of the acrylate resin and/or thermally cured unsaturated polyester resin. In the case of a decor layer that comprises a carrier sheet provided with synthetic material, the above-mentioned hard particles can be located in a layer formed by this synthetic material. Preferably, at least 5 grams or at least 10 grams per square meter of such hard particles are added. Such particles can further increase the wear resistance. Preferably, the particles have a so-called mesh size of F100 or smaller, but preferably not less than a mesh size of F320. The latter roughly corresponds to an average particle size of between 30 and 125 µm. The wear resistance of the obtained wear layer can, whether or not in combination with the presence of hard particles, also be adjusted by means of the thickness thereof. Preferably, the wear layer obtained base on thermally cured acrylate resin has at least a thickness of 50 µm, and preferably at least 100 µm.

Preferably, the above-mentioned wear layer is obtained by means of 10 to 300 grams per square meter of the above-mentioned acrylate resin or the above-mentioned unsaturated polyester resin. In the case of a furniture panel, the wear layer is preferably obtained using 10 to 80 grams (dry solids)-and preferably 10 to 30 grams (dry solids)-per square meter of the acrylate resin or thermally cured unsaturated polyester resin, while, in the case of a floor panel, the wear layer is preferably obtained using 30 to 160 grams per square meter of the acrylate resin or the unsaturated polyester resin.

Preferably, in a coated panel in accordance with any embodiments of any aspect of the invention, the wear layer is composed of various layers. The wear layer comprises multiple layers that have the features described as embodiments for the wear layer in the first and/or second and/or fourth aspect of the invention, and/or are obtained by any embodiment of the method of the third aspect of the invention.

The thermally cured acrylate resin or the unsaturated polyester resin can be applied in the wear layer in multiple layers, and these layers can be identical with respect to chemical formulation, but they can also be different from one another in order to optimize the relationship of performance to cost or to optimize flow behavior in the press.

Preferably, the compositions of these multiple layers differ from one another. More preferably, the uppermost layer of the wear layer comprise one or more of a fluorine-containing acrylate, a micro aluminum oxide, a silicone acrylate or a nanosilica.

Preferably, the coated panel in accordance with any of the independent aspects of the invention is a floor panel, preferably suitable for floating installation. The wear layer can show a particularly high wear and/or scratch resistance, but is also sufficiently soft to obtain a significant improvement in noise compared to conventional melamine surfaces.

Preferably, the coated panel has a relief on its surface. Preferably, the relief also shows gloss differences. These gloss differences can occur in zones with at least two respective gloss levels, wherein these gloss levels can be clearly distinguished by the user and thus with the naked eye. More specifically, it is preferable for at least two gloss levels each to be used for the above-mentioned zones that are to be selected such that specified zones clearly manifest themselves as matte zones, while other zones manifest themselves as non-matte or glossy zones. Most of the matte zones on the coated panel, for example a floor panel, preferably show a gloss level of 10 or more preferably less than 10, while the less matte or glossy zones show a gloss level of more than 10, and more preferably more than 20, all of this being measured in accordance with DIN 67530. Regardless of the absolute gloss levels used, the difference in gloss level between the matte and glossy zones of the coated panel is preferably at least 10.

With the same purpose as in the first and the second aspect, the present invention further relates in accordance with an independent third aspect to a method for the production of coated panels, wherein the panels comprise at least a substrate and a top layer applied thereto and the above-mentioned top layer comprises at least a decor layer and a translucent or transparent wear layer, characterized in that the method comprises at least the following steps:
- the step of applying to the above-mentioned decor layer one or a combination of an acrylate resin, an unsaturated polyester resin, a coating composition that comprises an acrylate resin; wherein the acrylate resin, the unsaturated polyester resin or the coating composition optionally comprises a thermoinitiator and optionally a photoinitiator; and
- the step of at least partial curing of the above-mentioned acrylate resin or unsaturated polyester resin or coating composition by means of hot pressing to form at least a part of the above-mentioned wear layer. It goes without saying that for the acrylate resin, the unsaturated polyester resin or the coating composition and the optional thermoinitiator, one can rely on the possibilities mentioned in the context of the above-mentioned first and/or second aspect of the invention. Preferably, the coating composition or the acrylate resin comprises at least a multifunctional acrylate oligomer and 0.5 to 2 parts of benzoyl peroxide, methylbenzoyl peroxide or lauryl peroxide as a thermoinitiator per 100 parts of acrylate resin; and more favorably 0.1 to 2 parts of benzoyl peroxide, methylbenzoyl peroxide or lauryl peroxide as a thermoinitiator per 100 parts, and more favorably 0.1 to 1 parts of benzoyl peroxide, methylbenzoyl peroxide or lauryl peroxide as a thermoinitiator per 100 parts. By means of the curing under pressure, maximum advantage is taken of the possibilities of thermocured acrylate resin or thermocured unsaturated polyester resin. It is clear that in this case as well, the above-mentioned instant dual cure system can be applied, wherein the lower amounts of the thermoinitiator can be used.

In use of an acrylate resin - whether or not it constitutes an above-mentioned coating composition - or an unsaturated polyester resin, an acrylate resin or an unsaturated polyester resin that comprise oligomers and monomers is preferably used.

Preferably, in the method in accordance with the third aspect of the invention, at least hard particles such as aluminum oxide particles, silicon oxide particles or silicon carbide particles are added to the acrylate resin or the unsaturated polyester resin or the coating composition.

Preferably, the above-mentioned pressing is carried out by means of a so-called short cycle press or single-daylight press. It is of course not excluded that it is possible to work with a press of the continuous type, preferably a press makes use of moving pressing belts between which the whole to be pressed moves or a hot press roller. It is also possible to work with a press of the continuous type that makes use of one or more press cylinders that are preferably textured. The invention is of particular importance in the texturing of wear layers by means of press cylinders (in texturing, the top layer of the coated panel is provided with a relief). In such a technique, the residence time under pressure is particularly short, and rapid thermally curing acrylate resin or rapid thermally curing polyester resin can sufficiently take on the structure of the pressing element even during such a short residence time. In this process, the top layer of the coated panel is provided with a relief, including an exact copy of the different gloss levels.

Preferably, the above-mentioned pressing is carried out at a temperature of 70 to 220°C (and preferably a temperature of 120 to 220°C) and/or at a pressure of 5 to 80 bar. The inventors have achieved favorable results in pressing in a short cycle press at 195°C and 40 bar (approximately 40 kg/cm²) for 22 seconds. Such process parameters correspond to those used in the pressing of melamine-based laminate panels. However, such high temperatures and high pressures are not necessary in the pressing of thermally curing acrylate resin or thermally curing unsaturated polyester resin, and the process parameters can be adapted over a broad range, more specifically reduced until the desired efficacy is achieved.

As mentioned above, the thermally curing acrylate resin - including the acrylate resin in the coating composition - or thermally curing unsaturated polyester resin preferably shows sufficient flow in cases of working with a structured pressing element. For this purpose, it is preferable to work at least with benzoyl peroxide or methylbenzoyl peroxide as an initiator.

The inventors have found that it can be important to rapidly increase the pressure of pressing so that the deformations due to the pressing element in order to form the desired structure in the surface and/or in the substrate of the panel are carried out before the curing of the acrylate resin has essentially taken place. This is also important in cases wherein the wear layer of thermally curing acrylate resin is to adhere to an underlying layer that for example comprises polyurethane, such as to a carrier sheet, or decorative paper that is treated at its surface with a polyurethane dispersion such as described above.

Preferably, the above-mentioned pressing is carried out with the help of a structured pressing element, such as with a structured press plate, for example of the type that is known per se from WO 2009/043910.

In pressing, a so-called framework or frame is used in pressing that extends along all of the edges of the material to be pressed. The purpose of such a framework or frame is to optionally counteract splashing of the acrylate resin or the unsaturated polyester resin out of the press when the pressure increases. In addition, selection of the thickness of the framework or the frame makes it possible to set the exact desired thickness of the wear layer. Moreover, the frame or framework ensures that sufficient pressure is exerted on the curing acrylate resin or the curing unsaturated polyester resin.

In accordance with a particular embodiment, the method of the invention further comprises the step of post-curing of the pressed wear layer by means of ultraviolet and/or electron radiation, both preferably carried out under an inert atmosphere. In accordance with an important example of the present particular embodiment, a surface can be achieved that has relief and/or gloss differences comparable to the structures that can be achieved in a melamine surface, but with the quality and noise characteristics of an electron beam cured surface. For this purpose, the wear layer that is pressed and structured by means of a pressing element can be post-cured by means of electron radiation under an inert atmosphere.

Preferably, the above-mentioned pressing is carried out on a stack that comprises at least the substrate, the decor layer and the acrylate resin, unsaturated polyester resin or the coating composition. In this manner, a process is achieved that in many aspects corresponds to the course of a production process for laminate panels, such that said process can be simply incorporated into an existing laminate production.

Preferably, the step of application to the above-mentioned decor layer of the acrylate resin or unsaturated polyester resin or coating composition is carried out while the decor layer is already part of a stack that comprises at least the substrate and the decor layer.

Preferably, as mentioned above, the above-mentioned decor layer comprises a carrier sheet, such as a paper sheet, and the method also comprises, in such a case, preferably at least the step of providing this carrier sheet with synthetic material. The method can further also comprise the step of providing the above-mentioned synthetic material with hard particles such as particles of aluminum oxide, silicon oxide or silicon carbide. This step can be carried out in practice in a variety of ways, for example by mixing the hard particles into the synthetic material before they are provided on this carrier sheet, or by applying the hard particles in the synthetic material after it has already been provided on the carrier sheet, for example by spreading these particles, or by roller application, spraying, or jet application of flowable mixtures or dispersions that comprise these particles .

Preferably, the step of providing this carrier sheet with synthetic material comprises at least the application of a water-based or a water-borne UV curable synthetic material to the above-mentioned carrier sheet.

Preferably, the step of providing this carrier sheet with synthetic material comprises at least the application of a UV curable substance, for example an acrylate resin and/or an unsaturated polyester, wherein this substance further comprises a thermoinitiator. This can be a so-called hydro-UV or a full hydro system in which a thermoinitiator is contained. Solvent-based acrylates can also be used; after drying, these form a film that is not adhesive. Such systems can comprise relatively long oligomers. The treated carrier sheet can be dried to a non-sticking state. The final curing of the oligomers can then take place in the pressing.

As mentioned above, the synthetic material that is provided on the carrier sheet preferably further comprises hard particles such as corundum particles, e.g. aluminum oxide particles.

It is to be noted that the step of the application to the above-mentioned decor layer of the acrylate resin or the unsaturated polyester resin or the coating composition can be carried out in two or multiple partial steps. Such an embodiment makes it possible in a more homogeneous manner to apply a larger amount of the above-mentioned acrylate resin or the above-mentioned unsaturated polyester resin or the coating composition. In addition, it is possible to apply different compositions of the acrylate resin or the unsaturated polyester resin or the coating composition in the respective partial steps. For example, it is possible to add acrylates with a specific functionality, such as acrylates that provide increased cleanability, only to the layers of acrylate resin that are closest to the surface of the panel or are to form the surface of the panel, or to add hard particles such as aluminum oxide only to specified layers.

Furthermore, it is to be noted that when the coating composition, the acrylate resin or the unsaturated polyester resin comprises photoinitiators, this coating composition, this acrylate resin or this unsaturated polyester resin can be gelled prior to the pressing and/or post-cured after the pressing by means of a UV irradiation, with or without an inert atmosphere (in order to counteract oxygen inhibition). In the case of the above-mentioned possibility, wherein the coating composition, the acrylate resin or the unsaturated polyester resin is applied in two or more partial steps, any UV irradiation prior to the pressing does not necessarily have to be carried out on all partial layers. For example, it is useful not to gel at least the uppermost partial layer, such that a sufficient flow of the coating composition, the acrylate resin or the unsaturated polyester resin in the pressing is retained for producing indentations in this layer by means of a textured pressing element in such a manner that thermally cured coating composition, thermally cured acrylate resin or cured unsaturated polyester resin is still present in the deepest point of this indentation, and/or for producing gloss differences in this layer by means of a pressing element with gloss differences.

The use of photoinitiators and UV irradiation prior to the pressing gives rise to a surface to be pressed that is dry, or at least dry to some extent, for the pressing. Dry processing can be desirable for various reasons in the production process, for example in order to easily allow intermediate storage and/or stacking. Such a dry or semi-dry state can also be achieved in other ways. Several important possibilities will be listed below.

Preferably, coating compositions are used in the method used that at least comprise: an acrylate resin, one or more components that comprise free hydroxyl groups, one or more components that comprise free isocyanate groups, optionally one or more thermoinitiators, optionally photoinitiators, and optionally one or more crosslinkers. Thermoinitiators, photoinitiators and crosslinkers can be used that are mentioned in the other aspects of the invention. Moreover, the coating composition can comprise hard particles in the manner of and as mentioned in the other independent aspects of the invention.

Preferably, the coating composition comprises a hydroxyl functional acrylate and/or a hydroxyl functional urethane acrylate.

Preferably, the coating composition comprises an isocyanate polymer and/or an isocyanate functional acrylate.

Preferably, in the above-mentioned hot pressing of the method, a condensation reaction occurs between hydroxyl and isocyanate groups of the coating composition, thus giving rise to crosslinking in the coating composition.

Preferably, after the step of application to the above-mentioned decor layer of the coating composition, the acrylate resin, or the unsaturated polyester resin; and before the step of at least partial curing of the above-mentioned coating composition, the acrylate resin or the unsaturated polyester resin by means of hot pressing to form at least a part of the above-mentioned wear layer; the method comprises the step of removing water and/or solvent from the coating composition, from the acrylate resin or from the unsaturated polyester resin.

Preferably, after the step of the application to the above-mentioned decor layer of the coating composition, the acrylate resin, or the unsaturated polyester resin; and before the step of at least partial curing of the above-mentioned coating composition, the acrylate resin or the unsaturated polyester resin by means of hot pressing to form at least a part of the above-mentioned wear layer; the method comprises the step of gelling of the coating composition, the acrylate resin or the unsaturated polyester resin to a non-viscous state. Such embodiments have the advantage of allowing a non-tacky intermediate product to be obtained, for example in a rolled-up state before carrying out the hot pressing.

Preferably, the method comprises, after the hot pressing, the step of UV post-curing of the pressed wear layer, wherein crosslinking of double bonds occurs. For this purpose, the coating composition, the acrylate resin or the unsaturated polyester resin preferably comprise photoinitiators. This UV curing preferably takes place under an inert atmosphere.

Preferably, the method comprises, after the hot pressing, the step of thermal post-curing of the pressed wear layer, wherein crosslinking of double bonds occurs. For this purpose, the coating composition, the acrylate resin or the unsaturated polyester resin preferably comprise thermoinitiators. Preferably, thermal post-curing after the hot pressing is carried out at a higher temperature than the hot pressing.

In a preferred embodiment of the method, before the step of application to the above-mentioned decor layer of the or a combination of the coating composition, the acrylate resin or the unsaturated polyester resin; the method comprises the step of the application of an adhesion promoter to the above-mentioned decor layer. Preferably, the adhesion promoter comprises or consists of one or more of a polyurethane, a polyurethane dispersion, a water-based polyurethane dispersion, a polyurethane dispersion with acrylate functionality, a melamine acrylate or an acrylate primer. More preferably, a reactive low-viscosity acrylate primer is used. Adhesion promoters such as those described in the first and/or second aspect of the invention can be used in the method of the third aspect of the invention.

Preferably, application of the or a combination of the coating composition, the acrylate resin or the unsaturated polyester resin to the above-mentioned decor layer takes place by means of a wet or dry method.

In use of a coating composition in the method, this coating composition preferably comprises a solvent, for example butyl acetate. The use of a coating composition that comprises a solvent has a number of advantages. If the coating composition is applied to a decor layer that is thermoplastic, this solvent acts on this thermoplastic decor layer. In this manner, after curing of the wear layer, a better adhesion to the decor layer is obtained. Examples are the use of a decor layer that comprises a thermoplastic film, for example polyvinyl chloride (PVC); and more preferably a printed thermoplastic film, more preferably a printed thermoplastic polyvinyl chloride (PVC) film. Examples are decor layers that are formed by the pressing of thermoplastic substrates, wherein these thermoplastic substrates can comprise fillers such as wood fibers, or inorganic fillers such as calcium, clay or chalk. Such thermoplastic substrates can comprise polyvinyl chloride (PVC) or polyethylene or polypropylene as a thermoplastic.

In a preferred method wherein the pressing is carried out by means of a press of the continuous type or by means of a hot press roller, the method preferably comprises the step of application of the decor layer to the substrate by unrolling the decor layer from a roll, and this decor layer is preferably a film out of synthetic material or a printed film out of synthetic material or a printed paper sheet - and preferably impregnated with a thermally curing resin. More preferably, the coating composition is laid on the decor layer by a dry method via unrolling from a roll.

Preferably, a relief is pressed into the wear layer after the hot pressing, and after pressing of the relief, a post-curing of the wear layer is carried out thermally or by means of UV radiation. Such an embodiment allows high quality decorative effects to be achieved. The wear layer is partially thermally cured in the hot pressing. However, the wear layer then still shows sufficient plastic properties to allow a relief to be pressed into it in subsequent processing-whether or not in a hot state. Because of the plastic behavior of the wear layer, this can be carried out in the form of the pressed relief, and without the occurrence of any cracks in the wear layer. In the subsequent post-curing, for example thermally or by means of UV radiation, the wear layer is further cured so that it can be given its final characteristics. In this post-curing, the use of UV radiation is preferred, as this also makes it possible to carry out efficient curing in deep and narrow relief. For example, such a method makes it possible to make panels with top layers that realistically simulate wood, also by means of pressing in a relief in register with a printed wood pattern in the decor layer. This is also possible by means of the invention in use of thermoplastic substrates such as substrates that comprise polypropylene, polyethylene, polyvinyl chloride, whether or not with fillers such as wood fibers or wood particles or inorganic fillers such as for example calcium, clay or chalk.

In a preferred method, the substrate comprises a thermoplastic, preferably PVC, polypropylene or polyethylene. Preferably, this thermoplastic is filled with fillers. The decor layer comprises a film out of synthetic material, for example a polyvinyl chloride film, and more preferably, this film out of synthetic material is printed. Alternatively, the decor layer can comprise or consist of a printing on the substrate.

In a preferred method, the substrate comprises a wood fiberboard (such as MDF or HDF) or consists thereof; and the decor layer comprises a printed carrier sheet, preferably a printed paper sheet. The carrier sheet is preferably impregnated with a thermally curing resin.

Furthermore, the method can also be carried out in accordance with a number of possibilities that are discussed below. When acrylate resin is specified, these possibilities also apply to the use of the coating composition that comprises an acrylate resin.

In accordance with a first possibility, the acrylate resin or the unsaturated polyester resin or the coating composition is applied via a two-component lacquer. This two-component lacquer can be dried by means of physical curing, while the thermally curing acrylate component or the thermally curing unsaturated polyester component is cured in the hot pressing.

In accordance with a second possibility, in the acrylate resin or in the unsaturated polyester resin, two thermoinitiators are applied with a different SADT (self accelerating decomposition temperature). The lowest SADT is preferably selected such that it is below the pressing temperature, and the thermoinitiator can thus become effective prior to the pressing or prior to the activation of the other thermoinitiator. In activation of a thermoinitiator with the lowest SADT, some drying can be obtained.

In accordance with a third possibility, the acrylate resin is applied as a 100% solid substance with both a photoinitiator and a thermoinitiator. The acrylate resin can then be gelled by means of UV radiation in order to obtain some drying. The coated paper can then optionally be stored at a temperature of less than the SADT of the thermoinitiator. Further or complete curing is then achieved in the hot pressing. After pressing, there is the option of carrying out further curing by means of UV radiation.

In accordance with a fourth possibility, a hydro- or water-based lacquer with both a photoinitiator and a thermoinitiator is worked with. It is possible to work in the same manner as in the third possibility, with a similar option of carrying out further curing after pressing.

In accordance with a fifth possibility, a solvent-based acrylate resin or unsaturated polyester resin is used that comprises a thermoinitiator and/or a photoinitiator. After the application of the solvent-based resin, the solvent is evaporated at low temperature. A tack-free surface is then obtained. The curing follows in pressing of the panel, optimally with extra curing by means of UV radiation after pressing.

In accordance with a sixth possibility, a dual cure lacquer used, wherein a combination of hydroxyl functional acrylates is combined with isocyanate functional acrylates. This lacquer comprises photoinitiators and/or thermal initiators. After evaporation of the solvent, the lacquer is not tacky, and the curing is achieved by crosslinking of the hydroxyl and isocyanate groups with accompanying curing via the double carbon bonds.

In accordance with a seventh possibility, one uses a hydro- or water-based lacquer, mainly exclusively with a thermoinitiator in order to initiate the radical reaction. The acrylate resin can then be gelled by means of hot air or (N)IR radiation. The coated paper can then optionally be stored at a temperature of less than the SADT of the thermoinitiator. Further or complete curing is then achieved in the hot pressing. After pressing, there is the option of carrying out further curing by means of UV radiation, if a photoinitiator is to be present.

In accordance with a further possibility, various possibilities among those mentioned above may be combined in different partial layers, optionally with intermediate accompanying drying or gelling or partial curing.

In general, it is preferable in the context of the present invention for the above-mentioned thermally cured acrylate resin layer or thermally cured unsaturated polyester to cover the entire surface of the floor panel, optionally with the exception of lowered edge areas, for example in the form of bevels or so-called chamfered edges. In this manner, sufficient water resistance is imparted to the entire surface.

With the same purpose as in the first to the third aspects, the present invention, in accordance with an independent fourth aspect, also relates to a coated panel with at least a substrate and a top layer applied thereto, wherein the above-mentioned top layer comprises at least a decor layer and a translucent or transparent wear layer, characterized in that the above-mentioned wear layer comprises an acrylate, wherein this acrylate comprises covalent bonds formed by reaction of hydroxyl groups with isocyanate groups. Coated panels in accordance with the fourth aspect of the invention can be made by means of the method of the third aspect of the invention, wherein an acrylate resin or a coating composition that comprises an acrylate resin is used.

In coated panels in accordance with the fourth aspect of the invention, an adhesion promoter is preferably located between the decor layer and the wear layer. Preferably, the adhesion promoter comprises or consists of one or more of a polyurethane, a polyurethane dispersion, a water-based polyurethane dispersion, a polyurethane dispersion with acrylate functionality, a melamine acrylate or an acrylate primer, for example a reactive low-viscosity acrylate primer. Adhesion promoters mentioned in the other aspects of the invention can be applied in this case.

Coated panels in accordance with the fourth aspect of the invention preferably comprise a relief in the wear layer. More preferably, this relief shows gloss differences.

Preferably, coated panels in accordance with the fourth aspect of the invention have a decor layer that shows a wood pattern by printing and the wear layer comprises a relief in register with the wood pattern, and the relief more preferably comprises gloss differences in register with the wood pattern.

Preferably, coated panels in accordance with the fourth aspect of the invention comprise a substrate that comprises a thermoplastic, for example polyvinyl chloride, polyethylene or polypropylene. Preferably, this thermoplastic comprises one or more of fillers, for example wood fibers or inorganic fillers such as calcium, clay or chalk. The decor layer comprises a film out of synthetic material or a printed film out of synthetic material, or the decor layer comprises printing on the substrate.

Preferably, coated panels in accordance with the fourth aspect of the invention comprise a substrate that comprises or consists of a wood fiberboard (such as MDF or HDF). The decor layer comprises a printed carrier sheet, preferably a printed paper sheet, and preferably a printed paper sheet impregnated with a thermally curing resin.

It is clear that the method of the third aspect is preferably used for producing the coated panels of the first and/or the second aspect and/or the fourth aspect and/or the preferred embodiments thereof.

It is clear that the coated panels of the first, the second, or the fourth aspect and/or obtained in accordance with the third aspect can show different structures. Several important possibilities are listed below, without this list being intended to be exhaustive.

In accordance with a first possibility, the coated panel comprises a wood fiberboard as a substrate, a printed paper sheet provided with synthetic material as a decor layer, and the wear layer of the invention. In accordance with an important example, the printed paper sheet comprises a coating of polyurethane, at least on the surface that is oriented towards the wear layer. Preferably, the paper sheet in the core is impregnated with a melamine-based resin such as a modified melamine resin. The polyurethane coating preferably has a König hardness of 50 to 70 seconds. The wear layer preferably shows traces of benzene or toluene, or benzoyl peroxide or methylbenzoyl peroxide. Preferably, hard particles such as corundum particles are located above the printed paper sheet. Preferably, the coated panel shows at its surface, more specifically in the wear layer, a structure or relief with sections 400 µm deep or deeper and/or relief sections that penetrate into the substrate.

In accordance with a second possibility, the coated panel comprises a substrate that is composed of synthetic material or a synthetic composite, more specifically of a thermoplastic or a thermoplastic composite. This can for example be a substrate based on filled PVC (polyvinyl chloride), PP (polypropylene), PET (polyethylene terephthalate), PU (polyurethane). The filler can comprise calcium carbonate or talc or another powder or substance, such as wood chips, bamboo chips, and/or other plant components. In the case of PVC, it can be rigid, semi-rigid, or soft PVC, specifically with a plasticizer content per hundred parts of PVC of less than 5, between 5 and 15, or more than 15 respectively. The content of fillers can vary sharply and can be as much as 80 or 85 percent by weight of the composite. The decor layer can for example comprise a print configured on a film out of synthetic material, for example on a PVC film. The wear layer then comprises, in accordance with the invention, at least a part obtained based on a thermally cured acrylate or a thermally cured unsaturated polyester. It is clear that the wear layer can also comprise further parts, such as a transparent film out of synthetic material, for example a transparent PVC film, that is then preferably located under the part that is formed by thermally cured acrylate or thermally cured unsaturated polyester. This embodiment allows the provision of sharp relief characteristics and excellent surface properties on the surface of a panel that is primarily composed of thermoplastic.

In accordance with a third possibility, the coated panel comprises a substrate that is at least partially cured together with the part of the wear layer formed from a coating composition or an acrylate resin or an unsaturated polyester resin and preferably also a decor layer. The substrate can for example be formed based on a textile layer, woven or nonwoven, for example a so-called spunbond nonwoven layer, such as a textile layer based on glass fibers, steel fibers and the like that is preferably provided with thermally curing synthetic material, such as thermally curing acrylate resin or thermally curing unsaturated polyester. It is possible to form a coated panel of this third possibility in one step by pressing a stack with the textile layer provided with synthetic material, the decor layer and the wear layer in a hot press. In this manner, an extremely thin but stable panel can be obtained, such as a panel with a thickness of less than 4 mm, or even 2 mm or thinner.

In accordance with a fourth possibility, the coated panel comprises a substrate and a wear layer in accordance with the invention, but the decor layer is formed by the surface of the substrate. This can for example be the case in decorative plate materials such as wooden plate materials, for example for application of the invention in solid parquet, or oriented strand boards (OSB).

In accordance with a fifth possibility, the top layer is formed as mentioned above in one of the first to the seventh possibilities, but the substrate is formed by a fiber cement plate, magnesium oxide-based plate, polyolefin-based plate, wood chip plate, OSB, filled soft PVC plate, filled hard or rigid PVC plate, foamed plate out of synthetic material, preferably a so-called closed-cell foamed plate out of synthetic material, a multilayer plate such as a multiplex plate or a synthetic material-based plate with both layers of soft PVC and layers of hard PVC or rigid PVC.

With the same purpose as in the first to the fourth aspects, the present invention, in accordance with an independent fifth aspect, also relates to a coated panel with at least a substrate and a top layer applied thereto, wherein the above-mentioned top layer comprises at least a decor layer, characterized in that between the above-mentioned decor layer and the substrate there is a thermally cured acrylate resin or a thermally cured unsaturated polyester resin and/or in that the decor layer is at least partially formed by a thermally cured acrylate resin or a thermally cured unsaturated polyester resin. In accordance with this fifth aspect, the coated panel thus does not necessarily have a wear layer. If this should indeed be the case, this wear layer is not necessarily obtained based on a thermally cured acrylate resin or based on a thermally cured unsaturated polyester resin. The inventors have found that the presence of a thermally cured acrylate resin or a thermally cured unsaturated polyester resin in any position in the top layer can lead to improvement in clicking sounds and other characteristics of the surface. Of course, the acrylate resin or polyester resin and/or thermoinitiators used in the context of the fourth aspect may be the same as those discussed in the context of the first to the fourth aspect, with the understanding that they need not necessarily lead to a transparent or translucent layer.

Preferably, the above-mentioned decor layer comprises at least a carrier sheet, such as a paper sheet, wherein thermally cured acrylate resin or thermally cured unsaturated polyester resin forms the bond between the above-mentioned carrier sheet and the substrate. It is clear that the paper sheets of the preceding aspects can be used for this purpose.

Preferably, thermally cured acrylate resin or thermally cured unsaturated polyester resin in the fourth aspect is configured to be colored, for example in that it comprises pigments such as titanium oxide. In such a case, the invention can possibly relate to a white panel that can be used per se for example as a furniture panel, or that as a semi-finished product can be used in a method wherein the white layer is used as a printing substrate for printing still to be carried out.

Preferably, thermally cured acrylate resin or thermally cured unsaturated polyester resin forms a base layer for printing carried out thereon that at least partially forms the above-mentioned decor layer.

In accordance with an alternative embodiment, the above-mentioned decor layer is a veneer, wherein thermally cured acrylate resin or the non-thermally-cured unsaturated polyester resin preferably extends from the underside of the veneer into and/or through pores, cracks and other openings present in the veneer. As mentioned above, the acrylate resin or the polyester resin is preferably colored. In this manner, the acrylate resin or the polyester resin can form a colored filling at the surface of the veneer at the location of openings such as knot holes and cracks.

In the context of the preceding four aspects, it is also noted that for the substrate, it is possible to use a wood fiberboard such as an MDF or HDF plate. In accordance with a particular embodiment, use is made of a wood fiberboard with low density, specifically with an average density of less than 750 kg per cubic meter, or even 650 kg per cubic meter or lower. The use of a plate of such low density contributes to further improvement of noise, for example the clicking noise, in the use of the coated panel, primarily in cases where these panels are used as floor panels in a floating installation. The use of such wood fiber plates of low density is partly made possible by the lower residual tensile stresses in the surface of the panels of the preceding aspects. Specifically, there is a limited risk that tensile stresses in the top layer can lead to the pulling upward of the upper edges. In the laminate panels of the prior art, such a phenomenon is ordinarily prevented or limited by increasing the density of the plate. With the top layer of the panels of the present invention, this is no longer necessary.

In accordance with a particular embodiment, a substrate is used that is free of unbound formaldehyde or free of formaldehyde. The can for example be a wood fiberboard that is bonded by means of pMDI glue (polymeric methylene diphenyl diisocyanate). In this case, if the top layer is also free of formaldehyde, for example chiefly built up based on paper and thermally curing acrylate resin and/or polyurethane, a completely low-formaldehyde or formaldehyde-free coated panel is obtained.

Furthermore, it is to be noted again that the invention in accordance with all of its aspects, taken separately, allows the above-mentioned top layer to comprise a water-impenetrable layer. This is made possible in that thermally curing acrylate resin or thermally curing unsaturated polyester resin, in contrast to melamine formaldehyde, does not produce any so-called "chemical" water as a byproduct in the polymerization. In the case of the pressing or curing of melamine resin, it is important that this chemical water can escape, whether into the substrate or to the surface, and in such a case, water-impenetrable layers are an obstacle to be avoided. Preferably, the above-mentioned water-impenetrable layer is formed by a layer present between the above-mentioned decor layer and the substrate. In this manner, any moisture that is present on the surface of the coated panel cannot penetrate into the substrate, and a highly dimensionally-stable panel can be obtained with varying humidity. This is important for example in cases where the above-mentioned substrate comprises a wood fiberboard or consists thereof. In accordance with another possibility, the above-mentioned water-impenetrable layer is formed by an ink layer that at least partially forms the above-mentioned decor layer. Still other examples of water-impenetrable layers are TPU (thermoplastic polyurethane) films, polyester-based layers, aluminum foils, in particular non-perforated aluminum foil, and the like. In accordance with all of these embodiments, the dimensional stability of the coated panels can be increased.

In general, it is to be noted that the present invention in accordance with all of its aspects, separately, can be applied in a particularly useful manner in coated panels on which the decor layer comprises printing based on UV cured inks. As explained in WO 2014/024100, UV cured inks can form a strong barrier for the above-mentioned chemical water of a melamine polycondensation reaction, which leads to all kinds of undesirable effects at the surface of the panels. The present invention prevents or limits the formation of chemical water by using a thermally curing acrylate resin in the top layer.

It is clear that the wear layer in the context of the present invention is considered to be the entire layer between the printed decor layer and the surface of the panel. Furthermore, it is clear that this wear layer is preferably essentially or even entirely composed using the above-mentioned thermally cured acrylate resin or thermally cured unsaturated polyester resin or the cured coating composition that comprises an acrylate resin. It is also not excluded for the wear layer at the surface of the panel to comprise another superficial coating and/or for a part of the wear layer to be formed by synthetic material that is originally applied to a carrier sheet of the decor layer as mentioned above.

In accordance with a particular embodiment, the above-mentioned wear layer comprises a material sheet, such as a paper sheet. Such a material sheet makes a considerable contribution to the impact resistance of the floor panel and reduces the risk that the usually hard but brittle wear layer will crack. The material sheet makes the wear layer more ductile, which is also important in subsequent processing of the edges of the floor panel. The ductility of the wear layer reduces the risk of splintered edges in milling of the optional coupling means. In addition, such a material sheet forms a barrier against the displacement during production of any wear-resistant or hard particles into the still wet wear layer, so that these particles can be more effective in the obtained floor panel. In accordance with the most preferred embodiment thereof, the wear layer comprises a material sheet that comprises embedded hard particles per se. For example, this can be a so-called Mead overlay, for example as described in US 5,820,937, wherein an alpha-cellulose paper is filled in the production thereof with aluminum oxide particles or other wear-resistant particles. In such an embodiment, the hard particles are in particular maintained at a fixed position in the thickness of the wear layer, and there are also no special measures necessary in order to maintain the hard particles in suspension in the lacquer layer or other material of the wear layer. The latter leads to a reduced risk of transparency loss due to the addition of any suspension agents and to a smoother production process. In processing of the edges as well, there is less risk of detachment of hard particles, as these are held together to a certain extent in the material sheet.

As mentioned above, the coated panel of the invention is preferably a floor panel, in particular intended for floating installation. Preferably, the floor panel is further characterized in that mechanical coupling components are provided at at least two opposite edges and that in a state in which two such floor panels are coupled, these coupling components provide a clamping effect of the upper edges, particularly the wear layers, against one another at the site of the edges. With such an embodiment, reliable water-tightness of the edges can be obtained. This is for example important in cases where as a substrate a porous and/or wood-based substrate is used, for example in the case of MDF or HDF.

In accordance with a particular embodiment, the above-mentioned substrate is provided at at least two opposite edges with a coating or impregnation that prevents or limits the penetration of moisture into the substrate. In the case of a coating, the coating is preferably configured overlapping with the edge of the top layer. In accordance with this embodiment, in other words, a moisture-resistant coating is provided on the edge of the floor panel, wherein this coating extends from the substrate at least over the boundary with the above-mentioned top layer. Preferably, the coating extends further, specifically at least over the boundary with the decor layer and/or the wear layer.

In cases where a wood fiberboard of low density, specifically with a density of less than 750 or less than 650 kg per cubic meter, is applied for floor panels with mechanical coupling means, measures are preferably taken to increase the quality of the material on the edges of the substrate. For example, reinforcement or impregnation with MDI or PU can be carried out at the edges. Another possibility is the application of an acrylate resin to these edges that can then preferably be cured by means of electron radiation. This curing can optionally be achieved together with the above-mentioned UV or electron beam post-curing. Preferably, the acrylate resin that is applied to the edges is a layer of viscous acrylate resin. Still another possibility is the application of urea formaldehyde (UF), melamine formaldehyde (MF) or another resin for pressing at least at the sites where the coupling means are ultimately to be formed. Furthermore, the substrate can be impregnated from the underside with PU or MDI. In most existing click systems, for example those of WO 97/47834, it is important for the lowermost area of the plate, specifically at the location where the lowermost groove lip of a lockable tongue-in-groove joint is located, to be secure.

As mentioned above, the wear layer is preferably provided with a structure or relief formed by indentations at the surface thereof. Preferably, this structure contributes to the imitation of the pattern depicted in the printed decor layer and/or the structure forms a demarcation of the printed decor layer, for example on at least one edge thereof. For example, in the case of a wood imitations, it is possible to work with indentations in the form of wood pores and/or veins. In accordance with another example, it is possible to work with a demarcation of the decor layer in the form of bevels or other edgings. In the case of stone decor, it is possible to work with a structure that mimics the presence of mortar joints. As mentioned above, the invention makes it possible to form such a structure or relief with deep indentations for example with indentations of 400 µm or deeper. For example, bevels or other edgings can be formed with a depth of 400 µm.

Preferably, the wear layer is provided with structural components that penetrate into the substrate, or, in other words, wherein the decor layer and the underlying substrate are also structured. In particular, such an embodiment is interesting in the implementation of structural components such as edgings, because in this manner, they can be given a deep configuration despite the limited thickness of the wear layer. The obtained relief in the decor layer itself also contributes here to the realistic imitation of the panel.

As mentioned above, in a structure or relief with deep indentations, and/or in structural components that penetrate into the substrate, a sufficient flow of thermally curing acrylate resin is preferably provided, for example by selecting as a thermoinitiator benzoyl peroxide or methylbenzoyl peroxide.

In accordance with a variant, the invention, in accordance with one or more of its preceding aspects, relates to a decorative profile instead of a coated panel. This can for example be the profile type that is used for the finishing of a floor coating, such as a transition profile, end profile, baseboard or the like. This variant provides smooth production of profiles that are suitable for decorative panels, for example in particular suitable for the above-mentioned coated panels. The invention can in accordance with the present variant lead to a decorative profile of floor quality that can be produced in a simpler manner and thus create more freedom for the design of such profiles.

The acrylate resin that is applied in the different aspects of the present invention can for example have the following composition:
- 5 to 80 percent by weight of monomers, or more preferably 5 to 60 percent by weight, which can be monofunctional, difunctional or multifunctional, preferably selected from the list of cyclic monofunctional monomers (CTFA (cyclic trimethylolpropane formal acrylate), TMCHA (trimethylcyclohexyl acrylate), TBCHA (4-tert-butylcyclohexyl acrylate), IBOA (isobornyl acrylate), THFA (tetrahydrofurfuryl acrylate), etc.), alkoxylated monofunctional monomers (PE4A, etc.), alkane monofunctional monomers (EOEOEA (2-(2-ethoxyethoxy)ethyl acrylate)), alkoxylated difunctional monomers, alkyl difunctional monomers, multifunctional monomers (TMPTA (trimethylolpropane triacrylate), GPTA (propoxylated glyceryl triacrylate), PET(T)A (pentaerythritol tri-(tetra)acrylate), etc.), acid-based adhesion promotor monomers; mono-, di- or multifunctional acrylate or methacrylate monomers are preferably used, preferably trifunctional so that the risk of occurrence of unpleasant odors is limited; as a particular example, TMPTMA (trimethylol propane trimethacrylate) can be used
- 0.1 to 10 percent by weight of additives such as defoaming agents, leveling agents; preferably, 0.1 to 2 percent by weight of a leveling agent and/or 0.1 to 2 percent by weight of a defoaming agent is used; as a leveling agent, for example, a silicone polyether acrylate, such as TEGO Rad 2300, can be used; as a defoaming agent, BYK 1790 can be used;
- 0.1 to 30 percent by weight and more preferably 1 to 10 percent by weight of nanosilica or corundum (Al₂O₃); for example, a dispersion of colloidal (nano)silica in a monomer such as a difunctional acrylate monomer can be used, or a dispersion of (nano)silica in butyl acetate or methoxypropyl acetate, or aluminum oxide platelets, for example with a particle size distribution of between 3 and 18 µm;
- 5 to 80 percent by weight of oligomers of unsaturated polyester, polyester acrylate, urethane acrylate, polyether acrylate, melamine acrylate, polycarbonate acrylate, epoxy acrylate, amine modified acrylate or urethane (meth)acrylate, preferably a urethane (meth)acrylate of 2 to 10 functional and/or a urethane acrylate with the formula A-I-P-I-A, wherein
   - A: acrylic or methacrylic, mono or polyfunctional
   - I: isocyanate (aliphatic monomeric or oligomeric di- or multifunctional)
   - P: polyol-long or short-chain polyester, polyether, polycarbonate, di- or multifunctional;
- optionally, fillers, pigments and/or reinforcing agents;
- 0.1 to 5 percent by weight of a thermoinitiator, preferably organic peroxide or an azo polymerization initiator;
- optionally, 0.1-5 percent by weight of a photoinitiator;
- optionally, 0.1-5 percent by weight of a crosslinker such as isocyanate, carbodiimide and/or aziridine.

It is also to be noted that the use of urethane acrylate has the additional advantage of making hydrogen bridges present, which leads to favorable ratio of flexibility to hardness of the obtained layer. It is also possible to work with or additionally use so-called "specialty high functionality urethane acrylates," for example with silicone based, hydrophilic functional or fluorinated acrylates.

Optionally, the above-mentioned composition, or the acrylate resin to be cured or the cured saturated polyester in general, can also comprise a photoinitiator, for example 0.1 to 10 percent by weight, preferably 1 to 10 percent by weight. These can for example be photoinitiators such as hydroxyacetaphenones, acetophenones, aminoacetophenones, phosphine oxides, benzophenones, thioxanthones, benzoyl formates or polymeric photoinitiators. These can for example be benzophenone or a phosphine oxide such as diphenyl(2,4,6-trimethylbenzoyl) phosphine oxide. Such a composition can further also comprise an amine synergist, for example 1 to 10 percent by weight. Such a synergist promotes the UV curing. The presence of a photoinitiator allows extra UV curing after thermal curing, for example after hot pressing, by means of which a structure is applied to the layer comprising acrylate resin, for example a wear layer. In accordance with another possibility, the photoinitiator can be used in order to gel the acrylate resin or the unsaturated polyester resin for carrying out thermal curing. For example, the acrylate resin or the unsaturated polyester resin can be gelled on a carrier sheet, for example a paper sheet with printing or a decorative paper, before such a carrier sheet is incorporated into a stack to be pressed. The gelling can also be used for the application of a backing layer to the underside of the substrate.

Furthermore, the above-mentioned composition can optionally comprise a UV absorber, for example 0.1 to 5 percent by weight, preferably 1 to 2%, or 1.5%. As a UV absorber, 2-hydroxyphenyl-s-triazine, possibly with a content of 15-25% of 2-methoxy-1-propyl-acetate (for example BASF Tinuvin 477) can be used, or bis(1,2,2,6,6-pentamethyl-4-piperidyl) sebacate with a content of methyl 1,2,2,6,6-pentamethyl-4-piperidyl sebacate (for example BASF Tinuvin 292).

Further optional components of the above-mentioned composition are matting agents such as fumed silica, whether or not treated with wax, precipitated silica, micronized organic polymer, polycondensed. For example, 0.1 to 8 percent by weight of such a matting agent can be used. Practical examples of suitable matting agents are Evonik Acematt 3600 and PQ corporation Gasil UV55C. Furthermore, optional components of the above-mentioned composition are additives that facilitate cleanability, antislip additives, and antimicrobial additives.

Several examples of possible compositions are listed below:
EXAMPLE 1 - wet process single thermal curing
   - 10-40%, preferably 20% of hexafunctional aliphatic urethane acrylate
   - 30-80%, preferably 60% of difunctional aliphatic urethane acrylate
   - 5-40%, preferably 18% of difunctional monomer dipropylene glycol diacrylate (DPGDA)
   - 0.1-5%, preferably 0.5-5%, more preferably 1% of TBPIN thermoinitiator, i.e. tertiary butylperoxy-3,5,5-trimethylhexanoate
   - 0.5-1.5%, preferably 1% of a levelling agent
EXAMPLE 2 - wet process single thermal curing
   - 10-40%, preferably 20% of hexafunctional aliphatic urethane acrylate
   - 30-80%, preferably 40% of difunctional aliphatic urethane acrylate
   - 5-40%, preferably 20% of trifunctional epoxy acrylate
   - 5-40%, preferably 18% of difunctional monomer dipropylene glycol diacrylate (DPGDA)
   - 0.1-5%, preferably 0.5-5%, more preferably 1% of TBPIN thermoinitiator
   - 0.5-1.5%, preferably 1% of a levelling agent
EXAMPLE 3 - wet process single thermal curing
   - 10-40%, preferably 20% of hexafunctional aliphatic urethane acrylate
   - 30-80%, preferably 40% of difunctional aliphatic urethane acrylate
   - 5-40%, preferably 20% of trifunctional epoxy acrylate
   - 5-40%, preferably 18% of trifunctional monomer (GPTA-propoxylated glycerol triacrylate)
   - 0.1-5%, preferably 0.5-5%, more preferably 1% of TBPIN thermoinitiator
   - 0.5-1.5%, preferably 1% of a levelling agent
EXAMPLE 4 - wet process single thermal curing
   - 10-40%, preferably 20% of hexafunctional aliphatic urethane acrylate
   - 30-80%, preferably 40% of trifunctional aliphatic urethane acrylate, i.e. comprises extra isocyanate groups for "instant dual cure" (isocyanate groups)
   - 5-40%, preferably 20% of trifunctional epoxy acrylate
   - 5-40%, preferably 18% of difunctional monomer dipropylene glycol diacrylate (DPGDA)
   - 0.1-5%, preferably 0.5-5%, more preferably 1% of TBPIN thermoinitiator
   - 0.5-1.5%, preferably 1% of a levelling agent
EXAMPLE 5 - wet process single thermal curing
   - 10-40%, preferably 20% of hexafunctional aliphatic urethane acrylate
   - 30-80%, preferably 50% of difunctional aliphatic urethane acrylate
   - 5-30%, preferably 10% of silicon acrylate (2 to 6 functional), i.e. a "specialty high functionality urethane acrylate" that increases cleanability
   - 5-40%, preferably 18% of difunctional monomer dipropylene glycol diacrylate (DPGDA)
   - 0.1-5%, preferably 0.5-5%, more preferably 1% of TBPIN thermoinitiator
   - 0.5-1.5%, preferably 1% of a levelling agent
EXAMPLE 6 - wet process single thermal curing
   - 10-40%, preferably 20% of hexafunctional aliphatic urethane acrylate
   - 30-80%, preferably 50% of difunctional aliphatic urethane acrylate
   - 2- 15%, preferably 10% of nanosilica dispersed in TMPTA monomer; this leads to increased scratch resistance
   - 5-40%, preferably 18% of difunctional monomer dipropylene glycol diacrylate (DPGDA)
   - 0.1-5%, preferably 0.5-5%, more preferably 1% of TBPIN thermoinitiator
   - 0.5-1.5%, preferably 1% of a levelling agent
EXAMPLE 7 - wet process with gelling - or complete dry process
   The same formulations as in examples 1 to 6 can be used, but with an extra 0.1-5% (and preferably 0.5-5%) of a photoinitiator such as benzophenone, 1-hydroxycyclohexylphenyl ketone, XBPO (phosphine oxide phenyl bis(246-trimethyl benzoyl)), TPO (C₂₂H_{21P}O₂), or ITX (isopropyl thioxanthone). It is not excluded and is even desirable to add a mixture of photoinitiators, wherein one photoinitiator is used to cure the surface and the other photoinitiator is used to deep-cure the lacquer.

In accordance with another practical example, thermally curing acrylate resin is composed of the following components:
- 53.7 parts of an aliphatic urethane acrylate;
- 0.3 parts of benzoyl peroxide;
- 46 parts of dipropylene glycol diacrylate;
- optionally defoaming agents, leveling agents, nanosilica and/or corundum (Al₂O₃).

EXAMPLE 8 - wet process (solvent based) with gelling - coating composition that comprises (all proportions in percent by weight or parts by weight)
   - 100 parts of component A, which consists of:
      o 40-90% of a hydroxyfunctional acrylate, in butyl acetate as a solvent (30-60% solvent),
      ∘ 0.01-1% of a crosslinker, for example an organometallic compound such as dibutyl tin dilaurate or zinc neodecanoate,
      ∘ 0.1-5% of a photoinitiator,
      ∘ 0.1-2% of a UV absorber,
      ∘ 0.1-2% of a light stabilizer,
      ∘ 5-40% of a mono, di, tri or tetrafunctional acrylate monomer
   - 5-20 parts of an isocyanate, for example an aliphatic polyisocyanate.
EXAMPLE 9 - wet process (solvent based) with gelling - coating composition that comprises (all proportions in percent by weight or parts by weight)
   - 30-70 parts of component A, which consists of:
      ∘ 40-90% of a hydroxyfunctional acrylate, in butyl acetate as a solvent (30-60% solvent),
      ∘ 0.01-1% of a crosslinker, for example an organometallic compound such as dibutyltin dilaurate or zinc neodecanoate,
      ∘ 0.1-5% of a photoinitiator,
      ∘ 0.1-2% of a UV-absorber,
      ∘ 0.1-2% of a light stabilizer,
      ∘ 5-40% of a mono, di, tri or tetrafunctional acrylate monomer
   - 30-70 parts of an isocyanate functional acrylate in solvent
EXAMPLE 10 - wet process (solvent based) with gelling - coating composition that comprises (all proportions in percent by weight or parts by weight)
   - 50-90 parts of component A, which consists of:
      ∘ 40-90% of a hydroxyfunctional urethane acrylate, in butyl acetate as a solvent (30-60% solvent),
      ∘ 0.01-1% of a crosslinker, for example an organometallic compound such as dibutyltin dilaurate or zinc neodecanoate,
      ∘ 0.1-5% of a photoinitiator,
      ∘ 0.1-2% of a UV-absorber,
      ∘ 0.1-2% of a light stabilizer,
      ∘ 5-40% of a mono, di, tri or tetrafunctional acrylate monomer
   - 10-50 parts of an isocyanate functional acrylate in solvent
EXAMPLE 11 - wet process single thermal curing
   - 10-80%, preferably 50% of unsaturated polyester
   - 10-50%, preferably 20% of tetrafunctional polyester acrylate
   - 5-40%, preferably 18% of difunctional monomer dipropylene glycol diacrylate (DPGDA)
   - 0.1-5%, preferably 0.-5%, more preferably 1% of TBPIN thermoinitiator
   - 0.5-1.5%, preferably 1% of a levelling agent
EXAMPLE 12 - wet process single thermal curing
   - 10-80%, preferably 50% of unsaturated polyester
   - 10-50%, preferably 20% of tetrafunctional polyester acrylate
   - 2-20%, preferably 10% of 10-functional aliphatic urethane acrylate
   - 5-40%, preferably 15% of difunctional monomer dipropylene glycol diacrylate (DPGDA)
   - 1-8%, preferably 3% of aluminum oxide
   - 0.1-5%, preferably 0.-5%, more preferably 1% of TBPIN thermoinitiator
   - 0.5-1.5%, preferably 1% of a levelling agent
EXAMPLE 13 - wet process with gelling - or complete dry process
   The same formulations as in examples 1 and 2 can be used, but with an extra 0.1-5% of a photoinitiator such as benzophenone, 1-hydroxy-cyclohexylphenylketone, XBPO (phosphine oxide phenyl bis(246-trimethyl benzoyl)), TPO (C₂₂H_{21P}O₂), or ITX (isopropyl thioxanthone). It is not excluded and is even desirable for a mixture of photoinitiators to be added, wherein one photoinitiator is used to cure the surface and the other photoinitiator is used to deep cure the lacquer.

In order to better explain the features of the invention, several preferred embodiments are described below as examples, without being in any way limitative, with reference to the attached drawings, wherein:
Fig. 1 shows a perspective view of a coated panel, more specifically a floor panel,
with the features of the invention;
Fig. 2 shows a larger-scale section along line II-II of Fig. 1;
Fig. 3 is a schematic view of several steps in a method with the features of the invention;
Figs. 4 and 5 show results of sound measurements of a panel with the features of the invention; and
Fig. 6 shows a method with the features of the invention.

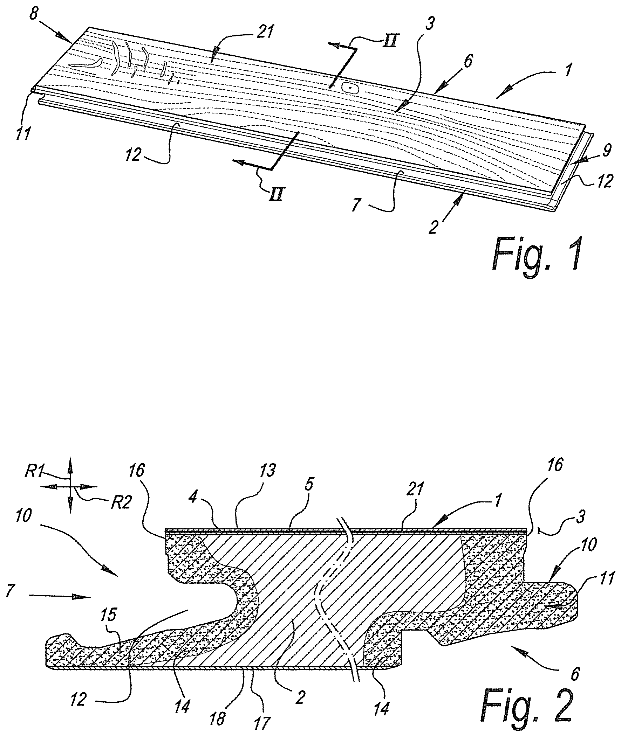

Fig. 1 shows a coated panel 1. In this case, this is a rectangular floor panel that comprises a substrate 2 and a top layer 3 applied thereto with at least a decor layer 4 and a translucent or transparent wear layer 5. The wear layer 5 comprises a thermally cured acrylate resin, wherein the curing is obtained by means of a thermally initiated radical crosslinking reaction. For this purpose, the starting point is a mixture of acrylate resin and a thermoinitiator. The wear layer can also comprise a cured polyester resin or a cured coating composition that comprises an acrylate.

The floor panel 1 is suitable for floating installation, and for this purpose, it is in this case provided with mechanical coupling means 10 both on the long pair of edges 6-7 and on the short pair of edges 8-9 that allow two of such floor panels 1 to be connected to one another at their respective edges 6-7-8-9.

Fig. 2 again clearly shows that at least the long pair of edges 6-7 of the floor panel 1 of Fig. 1 is provided with mechanical coupling means 10, chiefly in the form of a tooth 11 and a grove 12, wherein in the coupled state of two such floor panels 1 at these edges 6-7, there is locking between the tooth 11 and the groove 12, both in a first direction R1 perpendicular to the surface 13 of the coupled panels 1 and in a second direction R2 perpendicular to the coupled edges 6-7 and in the plane 13 of the panels 1.

Preferably, on the short edges 8-9, as is the case is in the embodiment of Figs. 1 and 2, mechanical coupling means 10 are also provided that provide locking in corresponding directions, whether or not chiefly in the form of a tooth 11 and a groove 12.

For the embodiment of Fig. 2, use is made of a substrate 2 that comprises a wood fiberboard with a density of 750 kg per cubic meter or less. In order to improve the binding strength of the coupling means present 10, the substrate 2 is impregnated on its edges 6-7 with MDI (methylene diphenyl diisocyanate) 14. As mentioned above, it is mainly important that at least the lowermost lip 15 that flanks the groove 12 is configured to be sufficiently strong. The impregnation or other reinforcement of the substrate material 2 near the upper edges 16 is also desirable in order to limit possible swelling due to penetration and/or printing effects during milling of the coupling means 10.

In the example, a backing layer 18 is also provided on the underside 17 of the panel 1. This is preferably carried out on a thermally cured acrylate resin and serves the main purpose of forming a barrier against any rising moisture. As explained in the invention, the wear layer 5 has a lower level of residual stresses, so that the backing layer 18 exerts only a minimal function as a balancing layer. The backing layer 18 can thus also be omitted, particularly in cases where the substrate 2 itself is composed of watertight material and or has a water-repellent underside 17 and/or is treated in order to be somewhat water-repellent at least on the underside 17 of the substrate 2, for example in that the substrate material is impregnated with MDI on the underside 17.

The decor layer 4 of the floor panel 1 of Figs. 1 and 2 comprises a carrier sheet provided with synthetic material 19, more specifically a paper sheet 20 with a surface weight of approximately 70 grams per square meter. The paper sheet 20 shows a printing 21 in the form of a wood motif. The synthetic material used 19 comprises double carbon bonds and is more specifically polyurethane.

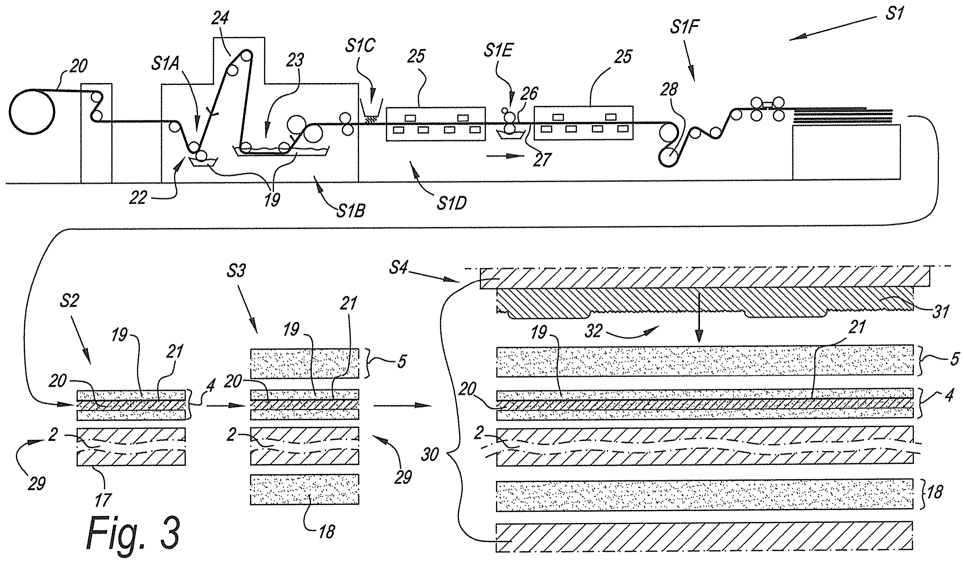

Fig. 3 again gives a schematic view of several steps in a method for producing the floor panel of Figs. 1 and 2.

In the example, a decor layer 4 that comprises at least a paper sheet 20 is taken as a basis. The paper sheet 20 is provided per se with a printing 21. In a first step S1, the paper sheet 20, more specifically a paper web from which the paper sheet 20 is later to be obtained by cutting, is provided with synthetic material 19. For this purpose, the paper web is unrolled and impregnated in the core by means of a first synthetic material 19. The core impregnation can limit the risk of splitting of the paper sheet 20 in the final coated panel 1. In the example, this core impregnation takes place in two partial steps, specifically a first partial step S1A wherein synthetic material 19 is applied by means of a roller 22, and a second partial step S1B wherein the paper sheet 20 is immersed in a bath 23 comprising the synthetic material 19. In the example, the synthetic material 19 that is applied in the first partial step S1A and in the second partial step S1B is the same. However, it is also possible for the synthetic materials used in the first and the second partial steps to be different from each other, independently of the specific application technique used. Between the first partial step S1A and the second partial step S1B, the paper sheet 20 follows a trajectory 24 that allows sufficient penetration of the first synthetic material 19 applied during the first partial step S1A. As mentioned in the introduction, it is possible to use as a first synthetic material 19 modified melamine formaldehyde resin, modified urea formaldehyde resin or modified melamine urea formaldehyde resin. Preferably, the first synthetic material 19 comprises double carbon bonds. Preferably, the first synthetic material 19 is selected from the list of polyurethane, urethane-acryl copolymer, acrylate, latex, and a dispersion in combination with acrylate functionality.

Fig. 3 further shows that after the above-mentioned core impregnation, aluminum oxide particles can be applied in a third partial step S1C, for example, as in this case, by means of scattering treatment. This is preferably followed in a fourth partial step S1D by drying treatment in a hot air oven 25. Optionally, in a fifth partial step S1E, on the side of the printing 21 and/or the side of the paper sheet 20 that is intended to be oriented toward the wear layer 5, an interlamellar coating 26 can be applied that increases the compatibility with the wear layer 5 to be formed from thermally curing acrylate resin or thermally curing unsaturated polyester resin or a coating composition comprising an acrylate resin. Such an interlamellar coating can for example be composed of a water-based polyurethane coating, a water-based UV curing substance or a melamine acrylate or reactive acrylate monomer. During the same step S1E, or in a separate step, a coating 27 can also be applied to the side of the paper sheet 20 that is intended to face the substrate 2. The purpose of such a coating 27 is to provide better adhesion to the substrate 2. In accordance with another possibility, such a coating 27 can also serve the purpose of providing noise damping. In the latter case, one preferably uses polyurethane, for example aromatic polyurethane or thermoplastic polyurethane (TPU). After the application of the interlamellar coating 26 and/or the coating 27, as in the example, a drying treatment, similar to that of the fourth partial step S1D, can again be carried out.

In a seventh partial step S1F, the treated paper sheet 20 passes in this example through a cooling roller 28, and the paper web in divided into sheets.

In a second step S2, a stack 29 is formed that comprises at least the substrate 2 and the decor layer 4, wherein the decor layer 4 in this case comprises a printed paper sheet 20 provided with synthetic material 19, obtained in step S1.

The method of the invention comprises at least the third step S3 shown, specifically the step of applying to the decor layer 4 an acrylate resin (or an unsaturated polyester resin or a coating composition that comprises an acrylate resin) that comprises a thermoinitiator, and the fourth step S4 shown, specifically the step of at least partial curing of the above-mentioned resin by means of hot pressing. In the third step S3, an acrylate resin with a thermoinitiator is applied to the underside 17 of the substrate 2 to form a backing layer 18. It is clear that in this case, the third step S3, specifically the step of applying the resin to the decor layer 4, is carried out while the decor layer 4 is already part of a stack 29 that comprises at least the substrate 2 and the decor layer 4.

In the example shown, the pressing is carried out by means of a so-called short cycle press 30, and more specifically by means of a structured pressing element 31 or pressing plate. The pressing is carried out on a stack 29 that comprises the substrate 2, the decor layer 4, the acrylate resin of the wear layer 5 and the backing layer 18. During pressing, the structure 32 of the pressing element 31 is copied in the surface of the wear layer 5.

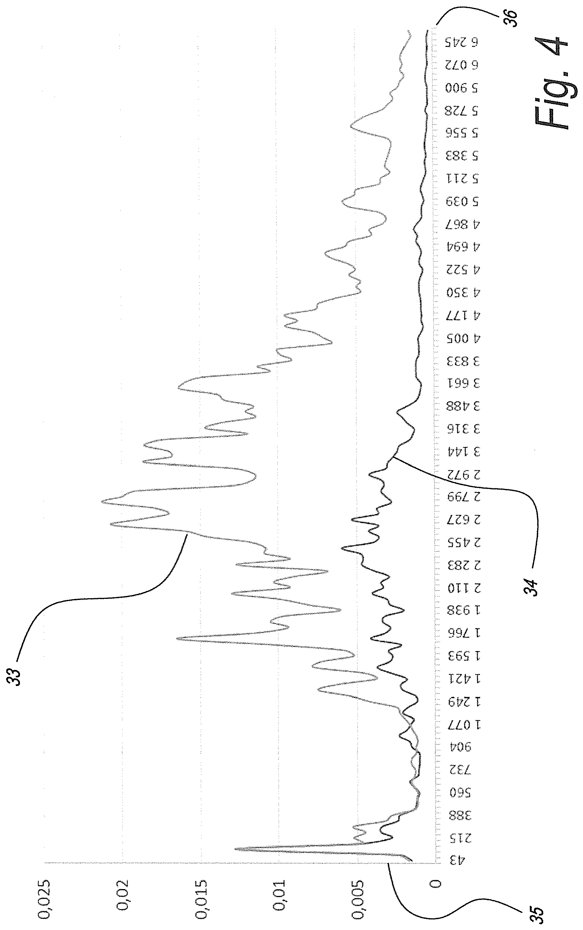

Fig. 4 shows the results, shown by curves 33-34, of noise measurements carried out on the one hand on a melamine surface of a floor panel of the prior art (curve 33), and on the other hand on a thermally cured acrylate surface of a floor panel in accordance with the invention (curve 34). These are measurements of loudness in phons, shown on the ordinate 35, as a function of frequency (Hz), shown on the abscissa 36, of a scratching noise made on this surface with a metal pin. Loudness is a variable that objectively reflects the subjectively experienced noise level. In the results for the melamine surface shown in curve 33 it is possible to find an extremely large and wide peak in the frequency interval of 1000 to 5000 Hz, in which the human ear is the most sensitive. This noise will be perceived by users to be irritating. When the same scratching is carried out on a thermally cured acrylate surface, the results in curve 34 show a significantly lower absolute loudness in the same interval. This leads to the perception of a warmer and less high noise that is comparable to the noise made on a wooden surface.

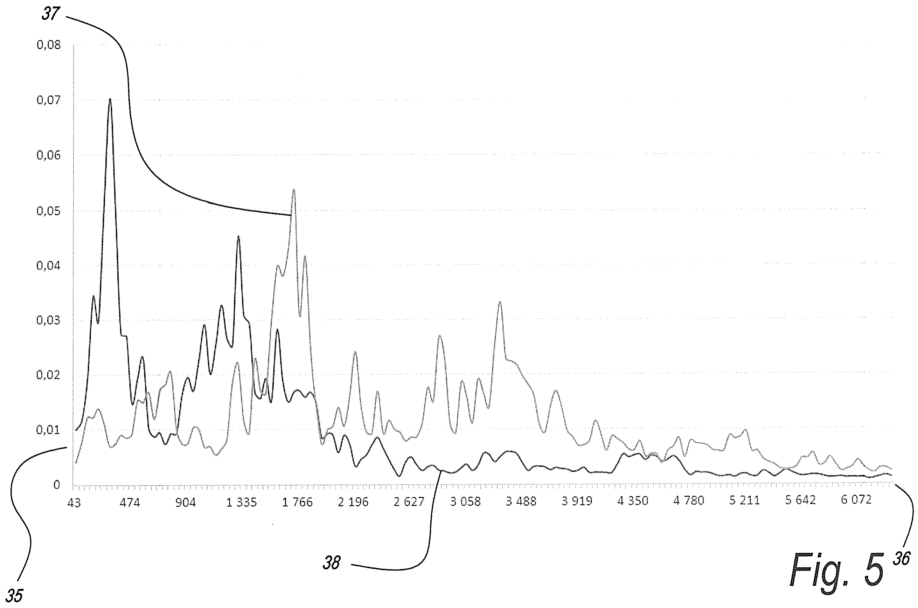

Fig. 5 shows the results, shown by curves 37-38, of loudness measurements carried out on the one hand on a melamine surface of a floor panel of the prior art (curve 37), and on the other hand on a thermally cured acrylate surface of a floor panel in accordance with the invention (curve 38). The floor panel of the prior art comprises a substrate of HDF, specifically wood fiberboard with an average density of approximately 950 kg per cubic meter. The floor panel in accordance with the invention comprises a substrate of MDF, more specifically a wood fiberboard with an average density of approximately 650 kg per m³. The results are measurements of loudness in phons, shown on the ordinate 35, as a function of frequency (Hz), shown on the abscissa 36, of a clicking sound made by a metal pin on this surface. The results show that a clicking nose on the floor panel of the invention is less loud and that peaks disappear in the interval of 1000 to 5000 Hz. This allows a warmer and more wood-like noise to be achieved.

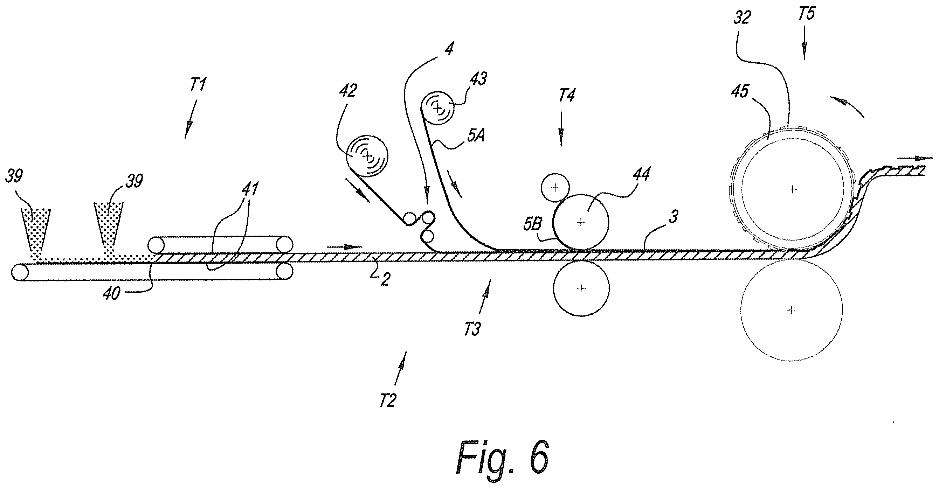

Fig. 6 shows another method for the production of a coated panel 1 with the features of the invention. In this case, it is a method for the production of a floor panel 1 with a substrate 2 of synthetic material or synthetic material composite, for example a floor panel of the type LVT (luxury vinyl tile) that comprises a substrate 2 of high filled soft, semi-rigid or rigid PVC. The substrate 2 can be formed by extrusion of the synthetic material or the composition, or, as is the case here, in a first step T1, can be formed by one or more scattering operations in which granules 39 or powders with a suitable composition are deposited on a conveyor belt 40 and consolidated between the belts 41 of a dual belt press. In a second step T2, a printed film out of synthetic material 24 can be unrolled onto the substrate 2 formed in order to form the decor layer 4, and in a third step T3, a translucent film out of synthetic material 43 can optionally be unrolled to form at least a part 5A of the wear layer 5. In a fourth step T4, a mixture of at least acrylate resin and a thermoinitiator is applied to the obtained whole, preferably to the translucent film out of synthetic material 43, for example by means of one or more rollers 44. The substrate 2, the one or more films out of synthetic material and the mixture of acrylate resin and the thermoinitiator are then consolidated in a fifth step T5 or cured by means of a hot roller 45. In the example shown, a structured roller is used. Ultimately, the structure 32 of the roller 45 is favorably copied in thermally curing acrylate resin. Such a method leads to a wear layer 5 with excellent esthetic and mechanical characteristics, without the need for an additional superficial UV cured lacquer layer, as is the case is for the LVT floor panels of the prior art.

As an alternative for the method shown in Fig. 6, the mixture of acrylate resin and a thermoinitiator can also be applied to a semi-finished product, either consolidated or not, which comprises a substrate of synthetic material or a synthetic material composite and at least a decor layer, for example to a semi-finished product with a substrate, a printed film out of synthetic material and optionally a transparent film out of synthetic material located above the printing. The whole of the semi-finished product and mixture can then be pressed in a short cycle press similar to the press 30 shown in step S4 of Fig. 3.

It is clear that the method shown and mentioned in the introduction can be completely or partially carried out per se on larger panels, slabs, or continuous webs. In such a case the actual coated panels are obtained at least after separation of the panels, slabs, or webs.

The present invention is by no means limited to the embodiments described above; rather such coated panels and methods for the production thereof can be realized without departing from the scope of the present invention. Furthermore, it is also possible to apply the concept of the invention in the texturing of packaging materials or flat materials such as posters, stationery, or lamination material for laminating profiles, such as baseboards and finishing profiles for floor coating. The invention therefore also relates to a method for the production of packaging materials or flat materials, characterized in that the method comprises the step of applying a thermal curable acrylate resin or thermal curable unsaturated polyester to the actual packaging material or flat material, for example to the paper, the cardboard, the film out of synthetic material, the synthetic material, for example with a thermoinitiator, and of at least partially curing the above-mentioned acrylate resin or unsaturated polyester by means of hot pressing, wherein preferably a structured pressing element or press film is used. It is clear that such method can further show the preferred features of the invention in accordance with the third aspect, without it being required to obtain coated panels.

The invention also relates to the following list of numbered items:
Item 1. Coated panel with at least a substrate (2) and a top layer applied thereto (3), wherein the above-mentioned top layer (3) comprises at least a decor layer (4) and a translucent or transparent wear layer (5), characterized in that the above-mentioned wear layer (5) comprises a thermally cured acrylate resin or a thermally cured unsaturated polyester resin, preferably wherein the thermal curing partially or completely cures the resin.
Item 2. Coated panel in accordance with item 1, characterized in that the above-mentioned acrylate resin or unsaturated polyester resin is cured by means of a thermally initiated radical crosslinking reaction.
Item 3. Coated panel in accordance with item 1 or 2, characterized in that the above-mentioned curing comprises at least a crosslinking of the double carbon bond present in the acrylate resin or unsaturated polyester resin.
Item 4. Coated panel, whether or not in accordance with one of the preceding items, with at least a substrate (2) and a top layer applied thereto (3), wherein the above-mentioned top layer (3) comprises at least a decor layer (4) and a translucent or transparent wear layer (5), characterized in that the above-mentioned wear layer (5) is obtained based on a mixture containing at least on the one hand acrylate resin and/or unsaturated polyester resin and on the other hand a thermoinitiator.
Item 5. Coated panel in accordance with item 4, characterized in that the above-mentioned thermoinitiator is an organic peroxide, preferably benzoyl peroxide or lauryl peroxide or tertiary butylperoxy-3,5,5-trimethylhexanoate (TBPIN).
Item 6. Coated panel in accordance with item 4 or 5, characterized in that the above-mentioned mixture comprises 0.1-5 parts of thermoinitiator per 100 parts of acrylate resin or per 100 parts of unsaturated polyester resin, and preferably 0.1-2 parts of thermoinitiator per 100 parts of acrylate resin or per 100 parts of unsaturated polyester resin.
Item 7. Coated panel in accordance with one of the preceding items, characterized in that the above-mentioned wear layer (5) comprises traces of a peroxide.
Item 8. Coated panel in accordance with one of the preceding items, characterized in that the above-mentioned wear layer (5) is cured uniformly or essentially uniformly over its entire thickness.
Item 9. Coated panel in accordance with one of the preceding items, characterized in that thermal curing comprises a chemical crosslinking, preferably of the double carbon bonds present in the acrylate resin or in the unsaturated polyester resin.
Item 10. Coated panel in accordance with one of the preceding items, characterized in that the above-mentioned wear layer (5) is obtained based on a mixture containing at least on the one hand acrylate resin and/or unsaturated polyester resin and on the other hand a photoinitiator, preferably wherein the mixture comprises 0.1-5 parts of a photoinitiator per 100 parts of acrylate resin or per 100 parts of unsaturated polyester resin.
Item 11. Coated panel in accordance with item 10, characterized in that the above-mentioned mixture comprises 0.1-5 parts of two different photoinitiators per 100 parts of acrylate resin or per 100 parts of unsaturated polyester resin.
Item 12. Coated panel in accordance with one of the preceding items, characterized in that the above-mentioned decor layer (4) comprises a carrier sheet provided with synthetic material (19), such as a paper sheet (20).
Item 13. Coated panel in accordance with item 12, characterized in that the above-mentioned synthetic material (19) comprises double carbon bonds.
Item 14. Coated panel in accordance with item 12 or 13, wherein the wear layer comprises a thermally cured acrylate resin or a thermally cured unsaturated polyester resin and wherein the above-mentioned synthetic material (19) is selected from the list of amino resins, urea formaldehyde, melamine urea formaldehyde, melamine formaldehyde, polyurethane, urethane-acrylic copolymer, melamine acrylate, melamine formaldehyde, acrylate, latex, dispersions, optionally in combination with a crosslinking agent.
Item 15. Coated panel in accordance with one of the preceding items, wherein the wear layer comprises a thermally cured acrylate resin and wherein the above-mentioned acrylate resin at least is obtained based on a multifunctional acrylate monomer and/or oligomer, such as a hexafunctional acrylate oligomer.
Item 16. Coated panel in accordance with one of the preceding items, wherein the wear layer comprises a thermally cured acrylate resin and wherein the above-mentioned acrylate resin at least is obtained based on a monofunctional or difunctional or a trifunctional acrylate monomer and/or oligomer.
Item 17. Coated panel in accordance with one of the preceding items, wherein the wear layer comprises a thermally cured acrylate resin and wherein the above-mentioned acrylate resin at least is obtained with a chemically modified acrylate, such as with a fluoroacrylate.
Item 18. Coated panel in accordance with one of the preceding items, wherein the wear layer comprises a thermally cured acrylate resin and wherein the above-mentioned acrylate resin is of the aliphatic type.
Item 19. Coated panel in accordance with one of the preceding items, wherein the wear layer is composed of various layers; and the wear layer comprises multiple layers having the characteristics that are described for the wear layer in one of the preceding items 1-18; preferably wherein the compositions of these multiple layers differ from one another.
Item 20. Coated panel in accordance with item 19, wherein the uppermost layer of the wear layer comprises one or more of a fluorine-containing acrylate, a micro aluminum oxide, a silicone acrylate or a nanosilica.
Item 21. Coated panel in accordance with one of the preceding items, characterized in that the coated panel (1) is a floor panel, preferably suitable for floating installation.
Item 22. Coated panel in accordance with one of the preceding items, characterized in that the coated panel (1) has a relief on its surface, optionally with gloss differences.
Item 23. Method for the production of coated panels, wherein the panels (1) comprise at least a substrate (2) and a top layer applied thereto (3) and the above-mentioned top layer (3) comprises at least a decor layer (4) and a translucent or transparent wear layer (5), characterized in that the method comprises at least the following steps:
   - the step (S3) of application to the above-mentioned decor layer (4) of one or a combination of a coating composition that comprises an acrylate resin, an acrylate resin or an unsaturated polyester resin; wherein the coating composition, the acrylate resin or the unsaturated polyester resin optionally comprises a thermoinitiator and optionally a photoinitiator; and
   - the step (S4) of at least partial curing of the above-mentioned coating composition, the acrylate resin or the above-mentioned unsaturated polyester resin by means of hot pressing to form at least a part of the above-mentioned wear layer (5).
Item 24. Method in accordance with item 23, characterized in that the method further comprises the step of post-curing of the pressed wear layer (5) by means of ultraviolet and/or electron radiation, preferably under an inert atmosphere.
Item 25. Method in accordance with one of the items 23 to 24, characterized in that the above-mentioned pressing is carried out with the help of a structured pressing element (31), preferably wherein a relief is formed in the top layer.
Item 26. Method in accordance with one of the items 23 to 25, characterized in that the above-mentioned pressing is carried out on a stack (29) that comprises at least the substrate (2), the decor layer (4) and the coating composition, and/or the acrylate resin and/or the unsaturated polyester resin.
Item 27. Method in accordance with one of the items 23 to 26, characterized in that the step (S3) of application to the above-mentioned decor layer (4) of the coating composition and/or the acrylate resin and/or the unsaturated polyester resin is carried out while the decor layer (4) is already part of a stack (29) that comprises at least the substrate (2) and the decor layer (4).
Item 28. Method in accordance with one of the items 23 to 27, characterized in that the above-mentioned decor layer (4) comprises a carrier sheet, such as a paper sheet (20), and the method at least also comprises the step of providing said carrier sheet with synthetic material (19).
Item 29. Method in accordance with item 28, characterized in that the step of providing said carrier sheet with synthetic material (19) comprises at least the application of a water-based or a water-based UV curable synthetic material to the above-mentioned carrier sheet.
Item 30. Method in accordance with item 28 or 29, characterized in that the step of providing said carrier sheet with synthetic material (19) comprises at least the application of a UV curable substance, wherein this substance further comprises a thermoinitiator.
Item 31. Method in accordance with one of the items 23 to 30, wherein the method comprises the step (S3) of application to the above-mentioned decor layer (4) of the coating composition; wherein the coating composition comprises at least an acrylate resin, one or more components that comprise free hydroxyl groups, one or more components that comprise free isocyanate groups, optionally one or more thermoinitiators, optionally photoinitiators, and optionally one or more crosslinkers.
Item 32. Method in accordance with item 31, wherein the coating composition comprises a hydroxyl functional acrylate and/or a hydroxyl functional urethane acrylate.
Item 33. Method in accordance with one of the items 31 or 32, wherein the coating composition comprises an isocyanate polymer and/or an isocyanate functional acrylate.
Item 34. Method in accordance with one of the items 31 to 33, wherein in the above-mentioned hot pressing, a condensation reaction occurs between hydroxyl and isocyanate groups of the coating composition, thus leading to crosslinking in the coating composition.
Item 35. Method in accordance with one of the items 23 to 34; wherein after the step (S3) of application to the above-mentioned decor layer (4) of the coating composition, the acrylate resin, or the unsaturated polyester resin; and before the step (S4) of at least partial curing of the above-mentioned coating composition, the acrylate resin or the unsaturated polyester resin by means of hot pressing to form at least a part of the above-mentioned wear layer (5); the method comprises the step of removing water and/or solvent from the coating composition, or from the acrylate resin, or from the unsaturated polyester resin.
Item 36. Method in accordance with one of the items 23 to 35, wherein after the step (S3) of application to the above-mentioned decor layer (4) of the coating composition, the acrylate resin, or the unsaturated polyester resin; and before the step (S4) of at least partial curing of the above-mentioned coating composition, the acrylate resin or the unsaturated polyester resin by means of hot pressing to form at least a part of the above-mentioned wear layer (5); the method comprises the step of gelling of the coating composition, the acrylate resin or the unsaturated polyester resin to a non-viscous state.
Item 37. Method in accordance with one of the items 23 to 36, wherein after the hot pressing, the step is carried out of UV post-curing of the pressed wear layer - preferably under an inert atmosphere - , wherein crosslinking of double bonds occurs; for this purpose, the coating composition, the acrylate resin or the unsaturated polyester resin preferably comprise photoinitiators.
Item 38. Method in accordance with one of the items 23 to 37, wherein after the hot pressing, the step is carried out of thermal post-curing of the pressed wear layer, wherein crosslinking of double bonds occurs; for this purpose, the coating composition, the acrylate resin or the unsaturated polyester resin preferably comprise thermoinitiators.
Item 39. Method in accordance with item 38, wherein the thermal post-curing after the hot pressing is carried out at a higher temperature than in the hot pressing.
Item 40. Method in accordance with one of the items 23 to 39, wherein before the step (S3) of application to the above-mentioned decor layer (4) of the or a combination of the coating composition, the acrylate resin or the unsaturated polyester resin; the method comprises the step of application of an adhesion promoter to the above-mentioned decor layer, preferably the adhesion promoter comprises or consists of one or more of a polyurethane, a polyurethane dispersion, a water-based polyurethane dispersion, a polyurethane dispersion with acrylate functionality, a melamine acrylate or an acrylate primer, preferably a reactive low-viscosity acrylate primer.
Item 41. Method in accordance with one of the items 23 to 40, wherein in the step (S3) of application to the above-mentioned decor layer (4) of the or a combination of the coating composition, the acrylate resin or the unsaturated polyester resin, this application takes place by a wet or dry method.
Item 42. Method in accordance with one of the items 23 to 41, wherein the method comprises the step (S3) of application to the above-mentioned decor layer (4) of the coating composition; and wherein the coating composition comprises a solvent, for example butyl acetate.
Item 43. Method in accordance with one of the items 23 to 42, characterized in that the pressing is carried out by means of a short cycle press (30).
Item 44. Method in accordance with one of the items 23 to 43, characterized in that the pressing is carried out by means of a press of the continuous type or by means of a hot press roller.
Item 45. Method in accordance with item 44; wherein the method comprises the step of application of the decor layer to the substrate by unrolling the decor layer from a roll, said decor layer preferably being a film out of synthetic material or a printed film out of synthetic material or a printed paper sheet - and preferably impregnated with a thermally curing resin; wherein the coating composition is preferably placed on the decor layer by a dry method by unrolling of a roll.
Item 46. Method in accordance with one of the preceding items 23 to 45, wherein a relief is pressed into the wear layer after the hot pressing and wherein, after pressing of the relief, the wear layer is post-cured thermally or by means of UV radiation.
Item 47. Method in accordance with one of the items 23 or 46, characterized in that the hot pressing is carried out at a temperature of 120 to 220°C and/or at a pressure of 10 to 80 bar.
Item 48. Method in accordance with one of the items 23 to 47, wherein the substrate comprises a thermoplastic - preferably PVC, polypropylene or polyethylene -, preferably filled with fillers; and wherein the decor layer comprises a film out of synthetic material - preferably printed-and preferably a PVC film -; or wherein the decor layer comprises or consists of printing on the substrate.
Item 49. Method in accordance with one of the items 23 to 47, wherein the substrate comprises a wood fiberboard (such as MDF or HDF) or consists thereof and the decor layer comprises a printed carrier sheet, preferably a printed paper sheet, and preferably a printed paper sheet impregnated with a thermally curing resin.
Item 50. Coated panel, with at least a substrate (2) and a top layer applied thereto (3), wherein the above-mentioned top layer (3) comprises at least a decor layer (4) and a translucent or transparent wear layer (5), characterized in that the above-mentioned wear layer (5) comprises an acrylate, wherein this acrylate comprises covalent bonds formed by reaction of hydroxyl groups with isocyanate groups.
Item 51. Coated panel in accordance with item 50, wherein an adhesion promoter is located between the decor layer and the wear layer, the adhesion promoter preferably comprises or consists of one or more of a polyurethane, a polyurethane dispersion, a water-based polyurethane dispersion, a polyurethane dispersion with acrylate functionality, a melamine acrylate or a - preferably reactive - low-viscosity acrylate primer.
Item 52. Coated panel in accordance with one of the items 50 to 51, wherein the wear layer comprises a relief, preferably wherein this relief shows gloss differences.
Item 53. Coated panel in accordance with item 52, wherein the decor layer shows a wood pattern by printing and wherein the relief is in register with the wood pattern, said relief preferably showing gloss differences in register with the wood pattern.
Item 54. Coated panel in accordance with one of the items 50 to 53, wherein the substrate comprises a thermoplastic -for example polyvinyl chloride, polyethylene or polypropylene - this thermoplastic preferably comprising one or more of fillers -; and wherein the decor layer comprises a film out of synthetic material or a printed film out of synthetic material or wherein the decor layer comprises a print on the substrate.
Item 55. Coated panel in accordance with one of the items 50 to 53, wherein the substrate comprises or consists of a wood fiberboard (such as MDF or HDF) and the decor layer comprises a printed carrier sheet, preferably a printed paper sheet, and preferably a printed paper sheet impregnated with a thermally curing resin.
Item 56. Method in accordance with one of the items 23 to 49, wherein the method is used for the production of panels (1) with the features of one of items 1 to 22, or one of items 50 to 55.
Item 57. Coated panel with at least a substrate (2) and a top layer applied thereto (3), wherein the above-mentioned top layer (3) comprises at least a decor layer (4), characterized in that between the above-mentioned decor layer (4) and the substrate (2), a thermally cured acrylate resin or a thermally cured unsaturated polyester resin is located and/or the decor layer (4) is at least partially formed by a thermally cured acrylate resin or a thermally cured unsaturated polyester resin.
Item 58. Coated panel in accordance with item 57, characterized in that the thermally cured acrylate resin or thermally cured unsaturated polyester resin is configured to be colored, for example in that it comprises pigments such as titanium oxide.
Item 59. Coated panel in accordance with item 57 or 58, characterized in that thermally cured acrylate resin or thermally cured unsaturated polyester resin forms a base layer for a print configured thereon that at least partially forms the above-mentioned decor layer.
Item 60. Coated panel in accordance with one of the items 57 to 59, characterized in that the above-mentioned decor layer relates to a veneer, wherein thermally cured acrylate resin or thermally cured unsaturated polyester preferably extends from the underside of the veneer into and/or through pores, cracks and other openings present in the veneer.
Item 61. Coated panel in accordance with one of the items 57 to 60, characterized in that the above-mentioned decor layer comprises at least a carrier sheet, such as a paper sheet (20), wherein thermally cured acrylate resin or thermally cured polyester resin forms the bond between the above-mentioned carrier sheet and the substrate (2).
Item 62. Coated panel, or method, in accordance with one of the preceding items, characterized in that for the substrate (2), a wood fiberboard is used with an average density of less than 850 kg per cubic meter, and preferably less than 750 kg per cubic meter.
Item 63. Coated panel, or method, in accordance with one of the preceding items, characterized in that the above-mentioned top layer (3) comprises a water-impenetrable layer.
Item 64. Coated panel, or method, in accordance with item 63, characterized in that the above-mentioned water-impenetrable layer is formed by a layer present between the above-mentioned decor layer (4) and the substrate (2).
Item 65. Coated panel, or method, in accordance with item 63, characterized in that the above-mentioned water-impenetrable layer is formed by an ink layer that at least partially forms the above-mentioned decor layer (4).

## Claims

1. Method for making a coated paper sheet, wherein the coated paper sheet comprises a paper sheet and a partially cured acrylate coating layer;
wherein the partially cured acrylate coating layer is provided for being at least partially - and preferably fully - cured in a thermal pressing operation;
wherein the method comprises the steps of
- providing a - preferably printed - paper sheet;
- applying a coating composition onto the paper sheet thereby obtaining a coating layer on the paper sheet;
- gelling the coating layer on the paper sheet to a non-viscous state; and such that the acrylate coating layer is a partially cured coating layer;
wherein the coating composition comprises at least an acrylate resin, one or more components that comprise free hydroxyl groups, one or more components that comprise free isocyanate groups, and optionally one or more thermoinitiators.

2. Method as in claim 1, **characterized in that** the coating composition comprises at one or more thermoinitiators and **in that** the partially cured coating layer comprises the one or more than one thermoinitiator.

3. Method as in any of the preceding claims, **characterized in that** the paper sheet is a printed paper sheet impregnated with a thermally curing resin; preferably impregnated with a melamine-based resin, such as with a modified melamine resin.

4. Method as in any of the preceding claims, **characterized in that** the paper sheet with the partially cured coating layer is rolled-up.

5. Method for the production of coated panels, wherein the panels (1) comprise at least a substrate (2) and a top layer applied thereto (3); wherein the top layer (3) comprises at least a decor layer (4) and a translucent or transparent wear layer (5), **characterized in that** the method comprises at least the following steps:
- the step (S3) of application to the decor layer (4) of a coating composition that comprises an acrylate resin, one or more components that comprise free hydroxyl groups, one or more components that comprise free isocyanate groups, optionally one or more thermoinitiators; and
- the step (S4) of at least partial curing of the coating composition by means of hot pressing - preferably using a structured pressing element (31) - to form at least a part of the wear layer (5).

6. Method as in claim 5, **characterized in that** the décor layer comprises a paper sheet, wherein the paper sheet is a printed paper sheet impregnated with a thermally curing resin; preferably impregnated with a melamine-based resin, such as with a modified melamine resin.

7. Method as in any of the preceding claims, **characterized in that** the acrylate resin is at least obtained based on a monofunctional or difunctional or a trifunctional acrylate monomer; and/or on a monofunctional or difunctional or a trifunctional acrylate oligomer.

8. Method as in any of the preceding claims, **characterized in that** the acrylate resin comprises between 20 and 60 percent by weight of monomers, preferably monofunctional and/or difunctional and/or trifunctional and/or tetrafunctional monomers.

9. Method as in any of the preceding claims, **characterized in that** the acrylate resin comprises oligomers and monomers.

10. Method as in any of the preceding claims, **characterized in that** the acrylate resin is of the aliphatic type.

11. Method as in any of the preceding claims, **characterized in that** the coating composition comprises at least one or more thermoinitiators and **in that** the one or more than one thermoinitiator is selected from a persulfate, a peroxydiphosphate, an azo-polymerization initiators, an organic peroxide - preferably selected from benzoyl peroxide, a methylbenzoyl peroxide, TPBIN (tertiary butylperoxy-3,5,5 trimethyl hexanoate), lauryl peroxide, 2-butanone peroxide, ketone peroxide, diacyl peroxide, peroxyketal, hydroperoxide, peroxydicarbonate, peroxymonocarbonate, tert-butyl peroxy 3,5,5 trimethyl hexanoate (TPBIN).

12. Method as in any of the preceding claims, **characterized in that** the coating composition comprises a multifunctional methacrylate monomer.

13. Method as in any of the preceding claims, **characterized in that** the coating composition comprises a hydroxyl functional acrylate and/or a hydroxyl functional urethane acrylate; and/or **in that** the coating composition comprises an isocyanate polymer and/or an isocyanate functional acrylate.

14. Method as in claim 5 and preferably as in any of the preceding claims 6 - 13, **characterized in that** after the step (S3) of application to the layer (4) of the coating composition; and before the step (S4) of at least partial curing of the coating composition by means of hot pressing to form at least a part of the above-mentioned wear layer (5); the method comprises the step of gelling of the coating composition to a non-viscous state.

15. Method as in claim 5 and preferably as in any of the preceding claims 6 - 14, **characterized in that** the coating composition is post-cured by means of a UV irradiation after the pressing step.
